(19) Europäisches Patentamt
European Patent Office
Office européen des brevets

(11) **EP 4 576 632 A1**

(12) **EUROPEAN PATENT APPLICATION**
published in accordance with Art. 153(4) EPC

(43) Date of publication:
**25.06.2025 Bulletin 2025/26**

(21) Application number: **23858885.9**

(22) Date of filing: **29.06.2023**

(51) International Patent Classification (IPC):
**H04L 5/00** (2006.01)

(52) Cooperative Patent Classification (CPC):
**H04L 5/00; H04W 72/0453**

(86) International application number:
**PCT/CN2023/103719**

(87) International publication number:
**WO 2024/045847 (07.03.2024 Gazette 2024/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **02.09.2022 CN 202211070965**

(71) Applicant: **Huawei Technologies Co., Ltd.
Shenzhen, Guangdong 518129 (CN)**

(72) Inventors:
• **HU, Mengshi
Shenzhen, Guangdong 518129 (CN)**
• **YU, Jian
Shenzhen, Guangdong 518129 (CN)**
• **GAN, Ming
Shenzhen, Guangdong 518129 (CN)**

(74) Representative: **Gill Jennings & Every LLP
The Broadgate Tower
20 Primrose Street
London EC2A 2ES (GB)**

(54) **COMMUNICATION METHOD AND COMMUNICATION APPARATUS**

(57) This application relates to the communication field, and in particular, to a high frequency channel configuration method and a communication apparatus. The solution may be applied to a WLAN system that supports 802.11 series protocols, for example, a next-generation Wi-Fi protocol of IEEE 802.11ax like 802.11be, Wi-Fi 7, or EHT, for another example, a next-generation protocol of 802.11be or Wi-Fi 8; or may be applied to a UWB-based wireless personal area network system or a sensing system. In the foregoing method, information may be transmitted between stations on a first channel. Because a spacings between a carrier center frequency of the first channel and a carrier center frequency of a second channel are integer multiples of a subcarrier spacing, when using a channel, a station may determine a location of each subcarrier on the channel based on a carrier center frequency of the channel instead of a direct current carrier frequency. This can avoid a direct current relative shift, reduce device implementation complexity, and facilitate device implementation.

200

First station

S210: Generate a PPDU

S220: Transmit the PPDU through a first channel, where the first channel is a channel with $N_{CB}=i$, a spacing between a carrier center frequency of the first channel and a carrier center frequency of a second channel is N times a subcarrier spacing, both the first channel and the second channel are channels with $N_{CB}=i$, the first channel is adjacent to the second channel, N is a positive integer, and $i$ is a positive integer

Second station

S230: Parse the PPDU

FIG. 6

EP 4 576 632 A1

## Description

This application claims priority to Chinese Patent Application No. 202211070965.9, filed with the China National Intellectual Property Administration on September 2, 2022 and entitled "COMMUNICATION METHOD AND COMMUNICATION APPARATUS", which is incorporated herein by reference in its entirety.

## TECHNICAL FIELD

This application relates to the field of communication technologies, and more specifically, to a communication method and a communication apparatus.

## BACKGROUND

A wireless local area network (wireless local area network, WLAN) has been developed for many generations, including standards lesss than or equal to 7 GHz, such as 802.11a/b/g, 802.11n, 802.11ac, 802.11ax, and 802.11be currently under discussion, and further including high frequency standards, such as the standards 802.11ad and 802.11ay that run near 60 GHz. In terms of channel configurations of the high frequency standards, 802.11ad supports 2.16 GHz channels, and 802.11ay further supports 4.32 GHz, 6.48 GHz, 8.64 GHz, 2.16+2.16 GHz, and 4.32+4.32 GHz channels in addition to 2.16 GHz channels.

Currently, a subcarrier configuration in a high frequency channel is relatively complex and is not conducive to device implementation.

## SUMMARY

This application provides a communication method and a communication apparatus, so that a location of each subcarrier on a channel can be determined based on a carrier center frequency of the channel instead of a direct current carrier frequency. This can reduce device implementation complexity and facilitate device implementation.

According to a first aspect, a communication method is provided. The method may be performed by a first station, or may be performed by a component (for example, a chip, a circuit, or a module) configured in the first station. This is not limited in this application.

The method includes: generating a physical layer protocol data unit (physical layer protocol data unit, PPDU); and sending the PPDU on a first channel, where the first channel is a channel with $N_{CB}=i$, $N_{CB}$ is a number of contiguous channels of a first width, a spacing between a carrier center frequency of the first channel and a carrier center frequency of a second channel is N times a subcarrier spacing, the second channel is a channel with $N_{CB}=i$, the first channel is adjacent to the second channel, N is a positive integer, and $i$ is a positive integer.

Based on the foregoing solution, information may be transmitted between stations on the first channel. Because a spacings between the carrier center frequency of the first channel and the carrier center frequency of the second channel are integer multiples of the subcarrier spacing, when using a channel, a station may determine a location of each subcarrier on the channel based on a carrier center frequency of the channel instead of a direct current carrier frequency. This can avoid a direct current relative shift, reduce device implementation complexity, and facilitate device implementation.

With reference to the first aspect, in some implementations of the first aspect, a bandwidth of the PPDU is less than or equal to a channel width of the first channel.

It should be understood that the bandwidth of the PPDU is a bandwidth occupied by a data subcarrier, a pilot subcarrier, and a direct current subcarrier on the first channel. In addition to the subcarriers in the bandwidth of the PPDU, there may be another subcarrier, for example, a guard subcarrier, on the first channel; or there may be no other subcarrier. This is not limited in this application. Therefore, the bandwidth of the PPDU may be less than or equal to the channel width.

The bandwidth of the PPDU depends on performance of a spectrum profile.

Optionally, the method may be applied to a frequency band greater than or equal to 45 GHz. In other words, the method may be applied to the WLAN high frequency standard.

For example, the method may be applied to the directional multi-gigabit (directional multi-gigabit, DMG) standard, the enhanced directional multi-gigabit (enhanced directional multi-gigabit, EDMG) standard, the China directional multi-gigabit (China directional multi-gigabit, CDMG) standard, or the China millimeter-wave multi-gigabit (China millimeter-wave multi-gigabit, CMMG) standard.

The foregoing solution can avoid a direct current relative shift in a high frequency channel, and reduce complexity of a subcarrier configuration in the high frequency channel.

Optionally, the first width is a minimum channel width granularity. In other words, the first width is a minimum unit used for channel division.

For example, the first width is 2.16 GHz, or the first width is 80 MHz or 320 MHz.

Optionally, a value of $i$ is any one of the following: 1, 2, 3, and 4.

For example, the carrier center frequency of the first channel is greater than or equal to 45 GHz.

With reference to the first aspect, in some implementations of the first aspect, N is a product of M elements in a first real number set, M is a positive integer, and the first real number set is a set consisting of factors obtained by performing factorization based on a first value X, where $X=|f_{c1}-f_{c2}|$, where $f_{c1}$ is the carrier center frequency of the first channel, and $f_{c2}$ is the carrier center frequency of the second channel; or X=first width*number of sampling points*$10^n$, where n is an integer.

For example, the M elements include only an odd number, or the M elements include at least one even number.

A value of n may be n=0, 1, 2, 3, ....

Optionally, all elements in the first real number set are prime numbers.

Based on the foregoing solution, a value of the subcarrier spacing may also be an integer in a unit of Hz or MHz. This facilitates device implementation.

With reference to the first aspect, in some implementations of the first aspect, the spacing between the carrier center frequency of the first channel and the carrier center frequency of the second channel is an odd multiple of the subcarrier spacing.

Based on the foregoing solution, because a frequency spacing between carrier center frequencies of two adjacent channels is an odd multiple of an OFDM subcarrier spacing, a subcarrier configuration may be performed in a left-right symmetric manner based on a carrier center frequency, which is simple and easy to implement.

For example, the first width is 2.16 GHz, and a value of the subcarrier spacing is any one of the following: 3.2 MHz, 3.456 MHz, 5.75 MHz, 9.6 MHz, 16 MHz, and 17.28 MHz.

With reference to the first aspect, in some implementations of the first aspect, the spacing between the carrier center frequency of the first channel and the carrier center frequency of the second channel is an even multiple of the subcarrier spacing.

Based on the foregoing solution, because a frequency spacing between carrier center frequencies of two adjacent channels is an even multiple of an OFDM subcarrier spacing, a carrier center frequency may be used as a direct current carrier frequency for all channels, and no direct current relative shift is required. This can reduce implementation complexity.

For example, the first width is 2.16 GHz, and a value of the subcarrier spacing is any one of the following: 4.21875 MHz, 4.32 MHz, 5.625 MHz, 5.4 MHz, 6.75 MHz, 7.5 MHz, 8.4375 MHz, 8.64 MHz, and 10.8 MHz.

With reference to the first aspect, in some implementations of the first aspect, a direct current carrier frequency of the first channel is the same as the carrier center frequency of the first channel; or a spacing between the direct current carrier frequency of the first channel and the carrier center frequency of the first channel is 0.5 times the subcarrier spacing.

With reference to the first aspect, in some implementations of the first aspect, a third channel is a channel with $N_{CB}=i+1$, and a spacing between a direct current carrier frequency of the third channel and the direct current carrier frequency of the first channel is an integer multiple of the subcarrier spacing.

Specifically, the spacing between the direct current carrier frequency of the third channel and the direct current carrier frequency of the first channel may be an odd multiple or an even multiple of the subcarrier spacing.

With reference to the first aspect, in some implementations of the first aspect, one subcarrier of the third channel and one subcarrier of the first channel have a same frequency location.

Based on the foregoing solution, subcarriers on the third channel and the first channel may have a same frequency location, so that a difference between subcarrier configurations on different channels can be reduced, and this is more conducive to device implementation.

According to a second aspect, a communication method is provided. The method may be performed by a second station, or may be performed by a component (for example, a chip, a circuit, or a module) configured in the second station. This is not limited in this application.

The method includes: receiving a physical layer protocol data unit (physical layer protocol data unit, PPDU) on a first channel, where the first channel is a channel with $N_{CB}=i$, $N_{CB}$ is a number of contiguous channels of a first width, a spacing between a carrier center frequency of the first channel and a carrier center frequency of a second channel is N times a subcarrier spacing, the second channel is a channel with $N_{CB}=i$, the first channel is adjacent to the second channel, N is a positive integer, and $i$ is a positive integer; and parsing the PPDU.

With reference to the second aspect, in some implementations of the second aspect, a bandwidth of the PPDU is less than or equal to a channel width of the first channel.

Optionally, the method may be applied to a frequency band greater than or equal to 45 GHz.

For example, the method may be applied to the directional multi-gigabit standard, the enhanced directional multi-gigabit standard, the China directional multi-gigabit standard, or the China millimeter-wave multi-gigabit standard.

Optionally, the first width is a minimum channel width granularity. In other words, the first width is a minimum unit used for channel division.

For example, the first width is 2.16 GHz, or the first width is 80 MHz.

Optionally, a value of $i$ is any one of the following: 1, 2, 3, and 4.

For example, the carrier center frequency of the first channel is greater than or equal to 45 GHz.

With reference to the second aspect, in some implementations of the second aspect, N is a product of M elements in a first real number set, M is a positive integer, and the first real number set is a set consisting of factors obtained by performing factorization based on a first value X, where $X=|f_{c1}-f_{c2}|$, where $f_{c1}$ is the carrier center frequency of the first channel, and $f_{c2}$ is the carrier center frequency of the second channel; or X=first width*number of sampling points*$10^n$, where n is an integer.

For example, the M elements include only an odd number, or the M elements include at least one even number.

A value of n may be n=0, 1, 2, 3, ....

With reference to the second aspect, in some implementations of the second aspect, the spacing between the carrier center frequency of the first channel and the carrier center frequency of the second channel is an odd multiple of the subcarrier spacing.

For example, the first width is 2.16 GHz, and a value of the subcarrier spacing is any one of the following: 3.2 MHz, 3.456 MHz, 5.75 MHz, 9.6 MHz, 16 MHz, and 17.28 MHz.

With reference to the second aspect, in some implementations of the second aspect, the spacing between the carrier center frequency of the first channel and the carrier center frequency of the second channel is an even multiple of the subcarrier spacing.

For example, the first width is 2.16 GHz, and a value of the subcarrier spacing is any one of the following: 4.21875 MHz, 4.32 MHz, 5.625 MHz, 5.4 MHz, 6.75 MHz, 7.5 MHz, 8.4375 MHz, 8.64 MHz, and 10.8 MHz.

With reference to the second aspect, in some implementations of the second aspect, a direct current carrier frequency of the first channel is the same as the carrier center frequency of the first channel; or a spacing between the direct current carrier frequency of the first channel and the carrier center frequency of the first channel is 0.5 times the subcarrier spacing.

With reference to the second aspect, in some implementations of the second aspect, a third channel is a channel with $N_{CB}$=i+1, and a spacing between a direct current carrier frequency of the third channel and the direct current carrier frequency of the first channel is an integer multiple of the subcarrier spacing.

Specifically, the spacing between the direct current carrier frequency of the third channel and the direct current carrier frequency of the first channel may be an odd multiple or an even multiple of the subcarrier spacing.

With reference to the second aspect, in some implementations of the second aspect, one subcarrier of the third channel and one subcarrier of the first channel have a same frequency location.

It should be understood that, for beneficial effects of the second aspect and the implementations of the second aspect, refer to the first aspect and the implementations of the first aspect.

According to a third aspect, a communication apparatus is provided. The apparatus may be a first station, or may be a component (for example, a chip, a circuit, or a module) configured in the first station. This is not limited in this application.

The apparatus includes: a processing unit, configured to generate a physical layer protocol data unit (physical layer protocol data unit, PPDU); and a transceiver unit, configured to send the PPDU on a first channel, where the first channel is a channel with $N_{CB}$=i, $N_{CB}$ is a number of contiguous channels of a first width, a spacing between a carrier center frequency of the first channel and a carrier center frequency of a second channel is N times a subcarrier spacing, the second channel is a channel with $N_{CB}$=i, the first channel is adjacent to the second channel, N is a positive integer, and i is a positive integer.

With reference to the third aspect, in some implementations of the third aspect, a bandwidth of the PPDU is less than or equal to a channel width of the first channel.

Optionally, the apparatus may support a frequency band greater than or equal to 45 GHz.

For example, the apparatus may support the directional multi-gigabit standard, the enhanced directional multi-gigabit standard, the China directional multi-gigabit standard, or the China millimeter-wave multi-gigabit standard.

Optionally, the first width is a minimum channel width granularity. In other words, the first width is a minimum unit used for channel division.

For example, the first width is 2.16 GHz, or the first width is 80 MHz.

Optionally, a value of $i$ is any one of the following: 1, 2, 3, and 4.

For example, the carrier center frequency of the first channel is greater than or equal to 45 GHz.

With reference to the third aspect, in some implementations of the third aspect, N is a product of M elements in a first real number set, M is a positive integer, and the first real number set is a set consisting of factors obtained by performing factorization based on a first value X, where $X=|f_{c1}-f_{c2}|$, where $f_{c1}$ is the carrier center frequency of the first channel, and $f_{c2}$ is the carrier center frequency of the second channel; or X=first width*number of sampling points*$10^n$, where n is an integer.

For example, the M elements include only an odd number, or the M elements include at least one even number.

A value of n may be n=0, 1, 2, 3, ....

With reference to the third aspect, in some implementations of the third aspect, the spacing between the carrier center frequency of the first channel and the carrier center frequency of the second channel is an odd multiple of the subcarrier spacing.

For example, the first width is 2.16 GHz, and a value of the subcarrier spacing is any one of the following: 3.2 MHz, 3.456 MHz, 5.75 MHz, 9.6 MHz, 16 MHz, and 17.28 MHz.

With reference to the third aspect, in some implementations of the third aspect, the spacing between the carrier center frequency of the first channel and the carrier center frequency of the second channel is an even multiple of the subcarrier spacing.

For example, the first width is 2.16 GHz, and a value of the subcarrier spacing is any one of the following: 4.21875 MHz, 4.32 MHz, 5.625 MHz, 5.4 MHz, 6.75 MHz, 7.5 MHz, 8.4375 MHz, 8.64 MHz, and 10.8 MHz.

With reference to the third aspect, in some implementations of the third aspect, a direct current carrier frequency of the first channel is the same as the carrier center frequency of the first channel; or a spacing between the direct current carrier frequency of the first channel and the carrier center frequency of the first channel is 0.5 times the subcarrier spacing.

With reference to the third aspect, in some implementations of the third aspect, a third channel is a channel with $N_{CB}=i+1$, and a spacing between a direct current carrier frequency of the third channel and the direct current carrier frequency of the first channel is an integer multiple of the subcarrier spacing.

Specifically, the spacing between the direct current carrier frequency of the third channel and the direct current carrier frequency of the first channel may be an odd multiple or an even multiple of the subcarrier spacing.

With reference to the third aspect, in some implementations of the third aspect, one subcarrier of the third channel and one subcarrier of the first channel have a same frequency location.

It should be understood that, for beneficial effects of the third aspect and the implementations of the third aspect, refer to the first aspect and the implementations of the first aspect.

According to a fourth aspect, a communication apparatus is provided. The apparatus may be a second station, or may be a component (for example, a chip, a circuit, or a module) configured in the second station. This is not limited in this application.

The apparatus includes: a transceiver unit, configured to receive a physical layer protocol data unit (physical layer protocol data unit, PPDU) on a first channel, where the first channel is a channel with $N_{CB}=i$, $N_{CB}$ is a number of contiguous channels of a first width, a spacing between a carrier center frequency of the first channel and a carrier center frequency of a second channel is N times a subcarrier spacing, the second channel is a channel with $N_{CB}=i$, the first channel is adjacent to the second channel, N is a positive integer, and $i$ is a positive integer; and a processing unit, configured to parse the PPDU.

With reference to the fourth aspect, in some implementations of the fourth aspect, a bandwidth of the PPDU is less than or equal to a channel width of the first channel.

Optionally, the apparatus may support a frequency band greater than or equal to 45 GHz.

For example, the apparatus may support the directional multi-gigabit standard, the enhanced directional multi-gigabit standard, the China directional multi-gigabit standard, or the China millimeter-wave multi-gigabit standard.

Optionally, the first width is a minimum channel width granularity. In other words, the first width is a minimum unit used for channel division.

For example, the first width is 2.16 GHz, or the first width is 80 MHz.

Optionally, a value of $i$ is any one of the following: 1, 2, 3, and 4.

For example, the carrier center frequency of the first channel is greater than or equal to 45 GHz.

With reference to the fourth aspect, in some implementations of the fourth aspect, N is a product of M elements in a first real number set, M is a positive integer, and the first real number set is a set consisting of factors obtained by performing factorization based on a first value X, where $X=|f_{c1}-f_{c2}|$, where $f_{c1}$ is the carrier center frequency of the first channel, and $f_{c2}$ is the carrier center frequency of the second channel; or X=first width*number of sampling points*$10^n$, where n is an integer.

For example, the M elements include only an odd number, or the M elements include at least one even number.

A value of n may be n=0, 1, 2, 3, ....

With reference to the fourth aspect, in some implementations of the fourth aspect, the spacing between the carrier center frequency of the first channel and the carrier center frequency of the second channel is an odd multiple of the subcarrier spacing.

For example, the first width is 2.16 GHz, and a value of the subcarrier spacing is any one of the following: 3.2 MHz, 3.456 MHz, 5.75 MHz, 9.6 MHz, 16 MHz, and 17.28 MHz.

With reference to the fourth aspect, in some implementations of the fourth aspect, the spacing between the carrier center frequency of the first channel and the carrier center frequency of the second channel is an even multiple of the subcarrier spacing.

For example, the first width is 2.16 GHz, and a value of the subcarrier spacing is any one of the following: 4.21875 MHz, 4.32 MHz, 5.625 MHz, 5.4 MHz, 6.75 MHz, 7.5 MHz, 8.4375 MHz, 8.64 MHz, and 10.8 MHz.

With reference to the fourth aspect, in some implementations of the fourth aspect, a direct current carrier frequency of the first channel is the same as the carrier center frequency of the first channel; or a spacing between the direct current carrier frequency of the first channel and the carrier center frequency of the first channel is 0.5 times the subcarrier spacing.

With reference to the fourth aspect, in some implementations of the fourth aspect, a third channel is a channel with $N_{CB}=i+1$, and a spacing between a direct current carrier frequency of the third channel and the direct current carrier frequency of the first channel is an integer multiple of the subcarrier spacing.

Specifically, the spacing between the direct current carrier frequency of the third channel and the direct current carrier frequency of the first channel may be an odd multiple or an even multiple of the subcarrier spacing.

With reference to the fourth aspect, in some implementations of the fourth aspect, one subcarrier of the third channel and one subcarrier of the first channel have a same frequency location.

It should be understood that, for beneficial effects of the fourth aspect and the implementations of the fourth aspect, refer to the first aspect and the implementations of the first aspect.

According to a fifth aspect, a communication apparatus is provided. The apparatus includes a processor, configured to: invoke a computer program stored in a memory and run the computer program, and control a transceiver to receive and send a signal, so that the communication apparatus performs the method according to any one of the first aspect and the second aspect or any possible implementation of these aspects. Optionally, the communication apparatus may further include the memory, configured to store the computer program. The communication apparatus may further include the transceiver.

According to a sixth aspect, a communication apparatus is provided, including a processor. The processor is configured to process data and/or information, so that the method according to any one of the first aspect and the second aspect or any possible implementation of these aspects is performed. Optionally, the communication apparatus may further include a communication interface. The communication interface is configured to receive data and/or information, and transmit the received data and/or information to the processor. Optionally, the communication interface is further configured to output data and/or information processed by the processor.

According to a seventh aspect, a chip is provided, including a processor. The processor is configured to run a program or instructions, so that the chip performs the method according to any one of the first aspect and the second aspect or any possible implementation of these aspects. Optionally, the chip may further include a memory, and the memory is configured to store a program or instructions. Optionally, the chip may further include a transceiver.

According to an eighth aspect, a computer-readable storage medium is provided. The computer-readable storage medium stores computer instructions, and the computer instructions are used to implement the method according to any one of the first aspect and the second aspect or any possible implementation of these aspects.

According to a ninth aspect, a computer program product is provided. The computer program product includes computer program code, and the computer program code is used to implement the method according to any one of the first aspect and the second aspect or any possible implementation of any one of these aspects.

According to a tenth aspect, a wireless communication system is provided, including the communication apparatuses according to the third aspect and the fourth aspect.

BRIEF DESCRIPTION OF DRAWINGS

FIG. 1 is a diagram of an application scenario to which an embodiment of this application is applicable;
FIG. 2 shows a communication apparatus according to this application;
FIG. 3 is a diagram of a channel configuration in a high frequency standard;
FIG. 4 is a diagram of a 2.16+2.16 GHz (aggregated) channel and a 4.32 GHz (non-aggregated) channel;
FIG. 5 is a diagram of a channel distribution;
FIG. 6 is a schematic flowchart of a communication method 200 according to an embodiment of this application;
FIG. 7 is a diagram of a channel distribution according to an embodiment of this application;
FIG. 8 is a diagram of another channel distribution according to an embodiment of this application;
FIG. 9 is a diagram of another channel distribution according to an embodiment of this application;
FIG. 10 is a diagram of another channel distribution according to an embodiment of this application;
FIG. 11 is a schematic flowchart of a communication method 300 according to an embodiment of this application;
FIG. 12 is a diagram of another channel distribution according to an embodiment of this application;
FIG. 13 is a diagram of another channel distribution according to an embodiment of this application;
FIG. 14 is a diagram of another channel distribution according to an embodiment of this application;
FIG. 15 is a diagram of a communication apparatus according to an embodiment of this application;
FIG. 16 is another diagram of a structure of a communication apparatus according to an embodiment of this application; and

FIG. 17 is another diagram of a structure of a communication apparatus according to an embodiment of this application.

DESCRIPTION OF EMBODIMENTS

The following describes technical solutions of this application with reference to accompanying drawings.

The technical solutions provided in embodiments of this application are applicable to a wireless local area network (wireless local area network, WLAN) scenario. For example, IEEE 802.11-related standards such as the 802.11a/b/g standard, the 802.11n standard, the 802.11ac standard, the 802.11ax standard, a next-generation Wi-Fi protocol of IEEE 802.11ax like 802.11be, Wi-Fi 7, extremely high throughput (extremely high throughput, EHT), 802.11ad, 802.11ay, or 802.11bf, are supported. For another example, a next generation protocol of 802.11be or Wi-Fi 8 is supported. The technical solutions provided in embodiments of this application may be applied to an ultra-wideband (ultra-wideband, UWB)-based wireless personal area network system, for example, the 802.15 series standards, or may be applied to a sensing (sensing) system, for example, the 802.11bf series standards. The 802.11n standard is referred to as high throughput (high throughput, HT), the 802.11ac standard is referred to as very high throughput (very high throughput, VHT), the 802.11ax standard is referred to as high efficiency (high efficiency, HE), and the 802.11be standard is referred to as extremely high throughput (extremely high throughput, EHT).

Although embodiments of this application are mainly described by using an example in which a WLAN network, especially a network to which the IEEE 802.11 system standards are applied, is deployed, a person skilled in the art easily understands that various aspects in embodiments of this application may be extended to other networks that use various standards or protocols, for example, a high performance radio local area network (high performance radio local area network, HIPERLAN), a wireless wide area network (wireless wide area network, WWAN), a wireless personal area network (wireless personal area network, WPAN), or other networks that are known or developed in the future. Therefore, regardless of a used coverage area and a used wireless access protocol, the various aspects provided in embodiments of this application are applicable to any appropriate wireless network.

The technical solutions in embodiments of this application may be further applied to various communication systems, for example, a WLAN communication system, a wireless fidelity (wireless fidelity, Wi-Fi) system, a long term evolution (long term evolution, LTE) system, an LTE frequency division duplex (frequency division duplex, FDD) system, LTE time division duplex (time division duplex, TDD), a universal mobile telecommunications system (universal mobile telecommunications system, UMTS), a worldwide interoperability for microwave access (worldwide interoperability for microwave access, WiMAX) communication system, a fifth generation (5th generation, 5G) system or new radio (new radio, NR), a future sixth generation (6th generation, 6G) system, an internet of things (internet of things, IoT) network, or a vehicle-to-everything (vehicle-to-everything, V2X).

The foregoing communication systems applicable to this application are only examples for description, and the communication systems applicable to this application are not limited thereto. This is uniformly described herein, and details are not described lesss than or equal to again.

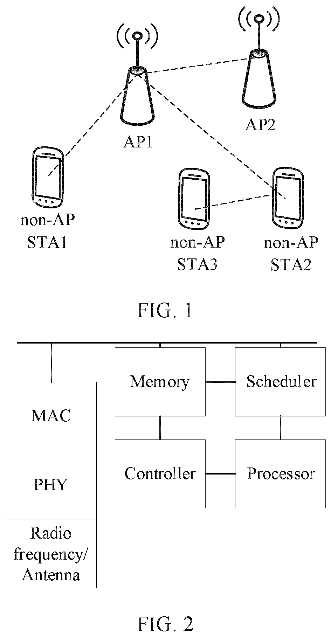

FIG. 1 is a diagram of an application scenario to which an embodiment of this application is applicable. As shown in FIG. 1, a resource configuration method provided in this application is applicable to data communication between stations (station, STA). The station may be an access point (access point, AP) station, or may be a non-access point station (non-access point station, non-AP STA). The access point station and the non-access point station are briefly referred to as an AP and a non-AP station respectively. Specifically, the solutions in this application are applicable to data communication between an AP and one or more non-AP stations (for example, data communication between AP1 and non-AP STA1 and between AP1 and non-AP STA2), data communication between APs (for example, data communication between AP1 and AP2), and data communication between a non-AP STA and a non-AP STA (for example, data communication between non-AP STA2 and non-AP STA3).

The access point may be an access point used by a terminal (such as a mobile phone) to access a wired (or wireless) network, and is mainly deployed at home, in a building, and in a park. A conventional coverage radius is tens of meters to hundreds of meters. Certainly, the access point may alternatively be deployed outdoors. The access point is equivalent to a bridge that connects a wired network and a wireless network. A main function of the access point is to connect various wireless network clients together and then connect the wireless network to the Ethernet.

Specifically, the access point may be a terminal or a network device with a Wi-Fi chip. The network device may be a server, a router, a switch, a bridge, a computer, a mobile phone, a relay station, a vehicle-mounted device, a wearable device, a network device in a 5G network, a network device in a future 6G network, a network device in a public land mobile network (public land mobile network, PLMN), or the like. This is not limited in embodiments of this application. The access point may be a device that supports a Wi-Fi standard. For example, the access point may also support one or more standards of the Institute of Electrical and Electronics Engineers (Institute of Electrical and Electronics Engineers, IEEE) 802.11 family such as 802.11a, 802.11b, 802.11g, 802.11n, 802.11ac, 802.11ax, 802.11be, 802.11ad, and 802.11ay.

The non-AP station may be a wireless communication chip, a wireless sensor, a wireless communication terminal, or the like, and may also be referred to as a user, user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus. The non-AP station may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, an internet of things device, a wearable device, a terminal device in a 5G network, a terminal device in a future 6G network, a terminal device in a PLMN, or the like. This is not limited in embodiments of this application. The non-AP station may be a device that supports a WLAN standard. For example, the non-AP station may support one or more standards of the IEEE 802.11 family such as 802.11a, 802.11b, 802.11g, 802.11n, 802.11ac, 802.11ax, 802.11be, 802.11ad, and 802.11ay.

For example, the non-AP station may be a mobile phone, a tablet computer, a set-top box, a smart television, a smart wearable device, a vehicle-mounted communication device, a computer, an internet of things (internet of things, IoT) node, a sensor, a smart home such as a smart camera, a smart remote control, or a smart water meter, or a sensor in a smart city.

The AP or non-AP station may include a transmitter, a receiver, a memory, a processor, and the like. The transmitter and the receiver are respectively configured to send and receive a packet structure. The memory is configured to store signaling information, store a preset value agreed in advance, and the like. The processor is configured to parse signaling information, process related data, and the like.

For example, FIG. 2 shows a communication apparatus according to this application. The apparatus shown in FIG. 2 may be an AP, or may be a non-AP station. A medium access control (medium access control, MAC) layer processing module, a physical (physical, PHY) layer processing module, a radio frequency/antenna, and the like are configured to implement related functions of the foregoing transmitter and receiver. As shown in FIG. 2, in addition to the MAC layer processing module, the PHY layer processing module, the radio frequency/antenna, the memory, and the processor, the apparatus may further include a controller and a scheduler.

It should be understood that FIG. 2 is merely an example of the apparatus provided in this application, and does not constitute a limitation on this application. For example, the apparatus may not include a controller and/or a scheduler.

Since development of a wireless local area network (wireless local area network, WLAN), stations may communicate with each other by using an orthogonal frequency division multiplexing (orthogonal frequency division multiplexing, OFDM) technology. In the OFDM technology, a frequency domain resource is divided into several sub-resources, each sub-resource in frequency domain is referred to as a subcarrier (subcarrier), the subcarrier may also be understood as a minimum granularity of the frequency domain resource, and a frequency difference between adjacent subcarriers is referred to as a subcarrier spacing. The solutions of this application may be applied to a system using the OFDM technology.

The WLAN has been developed through a plurality of generations of standards, including standards lesss than or equal to 7 GHz, such as 802.11a/b/g, 802.11n, 802.11ac, 802.11ax, and 802.11be currently under discussion, and further including high frequency standards, such as the standards 802.11ad and 802.11ay that run near 60 GHz.

The 802.11n standard is referred to as high throughput (high throughput, HT), the 802.11ac standard is referred to as very high throughput (very high throughput, VHT), the 802.11ax standard is referred to as high efficiency (high efficiency, HE), the 802.11be standard is referred to as extremely high throughput (extremely high throughput, EHT), the 802.11ad standard is referred to as directional multi-gigabit (directional multi-gigabit, DMG), and 802.11ay is referred to as enhanced directional multi-gigabit (enhanced directional multi-gigabit, EDMG).

In terms of channel configurations of low frequency standards, 802.11ax currently supports the following channel configurations: 20 MHz, 40 MHz, 80 MHz, 160 MHz, and 80+80 MHz. A difference between the 160 MHz channel and the 80+80 MHz channel lies in that the former is a continuous frequency band, and two 80 MHz channels of the latter may be separated. In 802.11be, only contiguous channels are supported, including 20 MHz, 40 MHz, 80 MHz, 160 MHz, and 320 MHz channels.

In terms of channel configurations of high frequency standards, 802.11ad supports 2.16 GHz channels, and 802.11ay supports more 2.16 GHz channels, and further supports 4.32 GHz, 6.48 GHz, 8.64 GHz, 2.16+2.16 GHz, and 4.32+4.32 GHz channels.

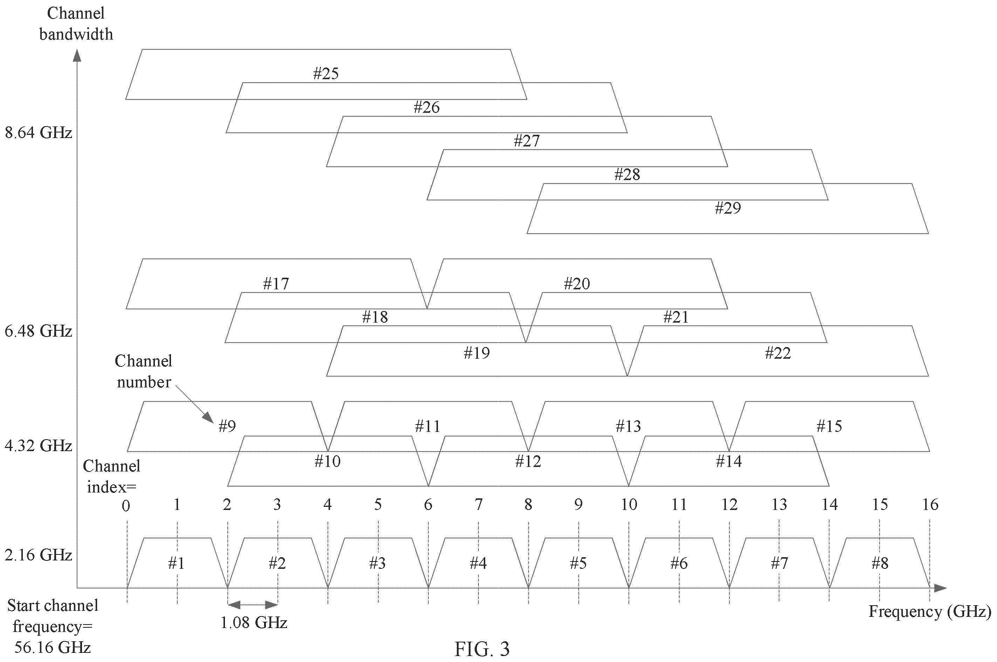

FIG. 3 is a diagram of a channel configuration in a high frequency standard. As shown in FIG. 3, channel numbers supported by 802.11ad are #1, #2, #3, and #4, and channel numbers supported by 802.11ay are #1 to #29, where the channel numbers #1 to #29 may also be referred to as channel identifiers 1 to 29. In FIG. 3, channel indexes (channel index) represent different frequency values, and frequency values represented by channel indexes 0 to 16 are respectively 57.24 GHz, 58.32 GHz, 59.4 GHz, 60.48 GHz, 61.56 GHz, 62.64 GHz, 63.72 GHz, 64.8 GHz, 65.88 GHz, 66.96 GHz, 68.04 GHz, 69.12 GHz, 70.2 GHz, 71.28 GHz, 72.36 GHz, 73.44 GHz, and 74.52 GHz. A difference between two adjacent frequency locations is 1.08 GHz.

In addition, in FIG. 3, #1, #2, ..., and #29 represent channel numbers for channel identification, where #1 to #8 are 2.16 GHz channels, #9 to #15 are 4.32 GHz channels, #17 to #22 are 6.48 GHz channels, and #25 to #29 are 8.64 GHz channels. Currently, the channel numbers supported by the 802.11ad standard are #1, #2, #3, and #4, and the channel numbers supported by the 802.11ay standard are #1 to #29. A channel width of each channel means a frequency difference between a start frequency and an end frequency of the channel. A frequency center of each channel is referred to as a carrier center frequency ($f_c$) of the channel. A carrier center frequency of the #1 channel can be calculated by using the following formula: 0.5*(start frequency of the channel+end frequency of the channel). For example, the start frequency of the #1 channel is a frequency for which channel index=0, that is, 57.24 GHz, and the end frequency of the #1 channel is a frequency for which channel index=2, that is, 59.4 GHz. Therefore, the carrier center frequency of the #1 channel is a frequency for which channel index=1, that is, 58.32 GHz. For another example, a start frequency of the #19 channel is a frequency for which channel index=4, that is, 61.56 GHz, and an end frequency of the #19 channel is a frequency for which channel index=10, that is, 68.04 GHz. Therefore, a carrier center frequency of the #19 channel is a frequency for which channel index=7, that is, 64.8 GHz. A frequency difference between carrier center frequencies of any two channels is referred to as a spacing between the carrier center frequencies of the two channels.

Based on the foregoing channels, there may also be an aggregated (aggregated) channel consisting of two or more channels in the #1 channel to the #29 channel, for example, a 2.16+2.16 GHz channel or a 4.32+4.32 GHz channel.

All the foregoing channels other than the 2.16 GHz channel may be obtained by using the 2.16 GHz channel. For example, the #1 channel to the #8 channel are represented as eight bits in ascending order of frequencies. The bit is set to 1 to indicate an occupied corresponding channel.

The 4.32 GHz channel may be represented as 11000000, 01100000, 00110000, 00011000, 00001100, 00000110, or 00000011.

A 6.48 GHz channel may be represented as 11100000, 01110000, 00111000, 00011100, 00001110, or 00000111.

The 8.64 GHz channel may be represented as 11110000, 01111000, 00111100, 00011110, or 00001111.

The 2.16+2.16 GHz channel may be represented as 11000000, 10100000, 10010000, 01100000, 00101000, ...

The 4.32+4.32 GHz channel may be, for example, 11110000, 11011000, 11001100, 01101100, 01111000, ...

It can be found from the foregoing descriptions that 4.32 GHz and 2.16+2.16 GHz used as an example both occupy two 2.16 GHz channels, but are different. To be specific, the 2.16+2.16 GHz channel may be understood as two independent (or may be referred to as non-aggregated) 2.16 GHz channels, and the 4.32 GHz channel is one larger contiguous channel formed by aggregating two 2.16 GHz channels, and is referred to as a non-aggregated (non-aggregated) channel or a bonded (bonded) channel in the standard. Because the 2.16+2.16 GHz channel is a channel formed by two independent 2.16 GHz channels, the channels do not need to be constrained by "need to be connected", and "need to be connected" means that there are two contiguous bits that are set to 1 in the foregoing eight bits. The 4.32 GHz channel needs to be constrained by "need to be connected", so as to form one larger bonded channel. A relationship between the 8.64 GHz channel and the 4.32+4.32 GHz channel is similar to the foregoing principle. The 8.64 GHz channel is referred to as a non-aggregated channel, and the 4.32+4.32 GHz channel is referred to as an aggregated channel, and is formed by aggregating two independent 4.32 GHz channels.

The following describes a difference between an aggregated channel and a non-aggregated channel used in 802.11ay.

In 802.11ay, supported non-aggregated channels are shown in Table 1.

Table 1

| Channel configuration | 8-bit representation (in ascending order) | Primary channel | Channel width |
|---|---|---|---|
| 1 | 10000000 | 1 | |
| 2 | 01000000 | 2 | |
| 3 | 00100000 | 3 | |
| 4 | 00010000 | 4 | |
| 5 | 00001000 | 5 | 2.16 GHz |
| 6 | 00000100 | 6 | |
| 7 | 00000010 | 7 | |
| 8 | 00000001 | 8 | |

(continued)

| Channel configuration | 8-bit representation (in ascending order) | Primary channel | Channel width |
|---|---|---|---|
| 9 | 11000000 | 1 | 4.32 GHz |
| 10 | | 2 | |
| 11 | 01100000 | 2 | |
| 12 | | 3 | |
| 13 | 00110000 | 3 | |
| 14 | | 4 | |
| 15 | 00011000 | 4 | |
| 16 | | 5 | |
| 17 | 00001100 | 5 | |
| 18 | | 6 | |
| 19 | 00000110 | 6 | |
| 20 | | 7 | |
| 21 | 00000011 | 7 | |
| 22 | | 8 | |
| 23 | 11100000 | 1 | 6.48 GHz |
| 24 | | 2 | |
| 25 | | 3 | |
| 26 | 01110000 | 2 | |
| 27 | | 3 | |
| 28 | | 4 | |
| 29 | 00111000 | 3 | |
| 30 | | 4 | |
| 31 | | 5 | |
| 32 | 00011100 | 4 | |
| 33 | | 5 | |
| 34 | | 6 | |
| 35 | 00001110 | 5 | |
| 36 | | 6 | |
| 37 | | 7 | |
| 38 | 00000111 | 6 | |
| 39 | | 7 | |
| 40 | | 8 | |

(continued)

| Channel configuration | 8-bit representation (in ascending order) | Primary channel | Channel width |
|---|---|---|---|
| 41 | 11110000 | 1 | 8.64 GHz |
| 42 | | 2 | |
| 43 | | 3 | |
| 44 | | 4 | |
| 45 | 01111000 | 2 | |
| 46 | | 3 | |
| 47 | | 4 | |
| 48 | | 5 | |
| 49 | 00111100 | 3 | |
| 50 | | 4 | |
| 51 | | 5 | |
| 52 | | 6 | |
| 53 | 00011110 | 4 | |
| 54 | | 5 | |
| 55 | | 6 | |
| 56 | | 7 | |
| 57 | 00001111 | 5 | |
| 58 | | 6 | |
| 59 | | 7 | |
| 60 | | 8 | |

In 802.11ay, supported 2.16+2.16 GHz aggregated channels are shown in Table 2.

Table 2

| Channel configuration | 8-bit representation (in ascending order) | Primary channel |
|---|---|---|
| 61 | 11000000 | 1 |
| 62 | 10100000 | 1 |
| 63 | 10010000 | 1 |
| 64 | 10001000 | 1 |
| 65 | 10000100 | 1 |
| 66 | 10000010 | 1 |
| 67 | 10000001 | 1 |
| 68 | 11000000 | 2 |
| 69 | 01100000 | 2 |
| 70 | 01010000 | 2 |
| 71 | 01001000 | 2 |
| 72 | 01000100 | 2 |
| 73 | 01000010 | 2 |
| 74 | 01000001 | 2 |
| 75 | 10100000 | 3 |

(continued)

| Channel configuration | 8-bit representation (in ascending order) | Primary channel |
|---|---|---|
| 76 | 01100000 | 3 |
| 77 | 00110000 | 3 |
| 78 | 00101000 | 3 |
| 79 | 00100100 | 3 |
| 80 | 00100010 | 3 |
| 81 | 00100001 | 3 |
| 82 | 10010000 | 4 |
| 83 | 01010000 | 4 |
| 84 | 00110000 | 4 |
| 85 | 00011000 | 4 |
| 86 | 00010100 | 4 |
| 87 | 00010010 | 4 |
| 88 | 00010001 | 4 |
| 89 | 10001000 | 5 |
| 90 | 01001000 | 5 |
| 91 | 00101000 | 5 |
| 92 | 00011000 | 5 |
| 93 | 00001100 | 5 |
| 94 | 00001010 | 5 |
| 95 | 00001001 | 5 |
| 96 | 10000100 | 6 |
| 97 | 01000100 | 6 |
| 98 | 00100100 | 6 |
| 99 | 00010100 | 6 |
| 100 | 00001100 | 6 |
| 101 | 00000110 | 6 |
| 102 | 00000011 | 6 |
| 103 | 10000010 | 7 |
| 104 | 01000010 | 7 |
| 105 | 00100010 | 7 |
| 106 | 00010010 | 7 |
| 107 | 00001010 | 7 |
| 108 | 00000110 | 7 |
| 109 | 00000011 | 7 |
| 110 | 10000001 | 8 |
| 111 | 01000001 | 8 |
| 112 | 00100001 | 8 |
| 113 | 00010001 | 8 |
| 114 | 00001001 | 8 |

(continued)

| Channel configuration | 8-bit representation (in ascending order) | Primary channel |
|---|---|---|
| 115 | 00000101 | 8 |
| 116 | 00000011 | 8 |

In 802.11ay, supported 4.32+4.32 GHz aggregated channels are shown in Table 3.

Table 3

| Channel configuration | 8-bit representation (in ascending order) | Primary channel |
|---|---|---|
| 117 | 11110000 | 1 |
| 118 | | 2 |
| 119 | 11011000 | 1 |
| 120 | | 2 |
| 121 | 11001100 | 1 |
| 122 | | 2 |
| 123 | 11000110 | 1 |
| 124 | | 2 |
| 125 | 11000011 | 1 |
| 126 | | 2 |
| 127 | 01111000 | 2 |
| 128 | | 3 |
| 129 | 01101100 | 2 |
| 130 | | 3 |
| 131 | 01100110 | 2 |
| 132 | | 3 |
| 133 | 01100011 | 2 |
| 134 | | 3 |
| 135 | 11110000 | 3 |
| 136 | | 4 |
| 137 | 00111100 | 3 |
| 138 | | 4 |
| 139 | 00110110 | 3 |
| 140 | | 4 |
| 141 | 00110011 | 3 |
| 142 | | 4 |
| 143 | 11011000 | 4 |
| 144 | | 5 |
| 145 | 01111000 | 4 |
| 146 | | 5 |
| 147 | 00011110 | 4 |
| 148 | | 5 |

(continued)

| Channel configuration | 8-bit representation (in ascending order) | Primary channel |
|---|---|---|
| 149 | 00011011 | 4 |
| 150 | | 5 |
| 151 | 11001100 | 5 |
| 152 | | 6 |
| 153 | 01101100 | 5 |
| 154 | | 6 |
| 155 | 00111100 | 5 |
| 156 | | 6 |
| 157 | 00001111 | 5 |
| 158 | | 6 |
| 159 | 11000110 | 6 |
| 160 | | 7 |
| 161 | 01100110 | 6 |
| 162 | | 7 |
| 163 | 00110110 | 6 |
| 164 | | 7 |
| 165 | 00011110 | 6 |
| 166 | | 7 |
| 167 | 11000011 | 7 |
| 168 | | 8 |
| 169 | 01100011 | 7 |
| 170 | | 8 |
| 171 | 00110011 | 7 |
| 172 | | 8 |
| 173 | 00011011 | 7 |
| 174 | | 8 |
| 175 | 00001111 | 7 |
| 176 | | 8 |

The following uses the 2.16+2.16 GHz (aggregated) channel and the 4.32 GHz (non-aggregated) channel as an example to describe in detail a difference between subcarrier distributions in channels when channel widths are the same.

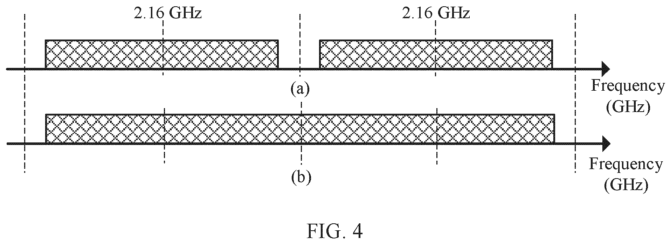

FIG. 4 is a diagram of a 2.16+2.16 GHz (aggregated) channel and a 4.32 GHz (non-aggregated) channel. (a) in FIG. 4 is a diagram of the 2.16+2.16 GHz channel, and (b) in FIG. 4 is a diagram of the 4.32 GHz channel. In FIG. 4, a dashed line represents a carrier center frequency, and a shadow part may be considered as a range in which a data subcarrier, a pilot subcarrier, and a direct current subcarrier are located. In this application, a bandwidth occupied by a data subcarrier, a pilot subcarrier, and a direct current subcarrier on a channel is referred to as a bandwidth of a physical layer protocol data unit (physical layer protocol data unit, PPDU) or a PPDU bandwidth, and a sum of quantities of data subcarriers, pilot subcarriers, and direct current subcarriers is referred to as a number of subcarriers. As shown in FIG. 4, in terms of a PPDU bandwidth, a PPDU bandwidth in the 2.16+2.16 GHz channel includes PPDU bandwidths of two independent 2.16 GHz channels, and in the 4.32 GHz channel, two contiguous 2.16 GHz channels are considered as a whole to consider a subcarrier distribution.

It should be understood that, in the standard, to describe a size of a contiguous channel, a representation manner in which $N_{CB}$ is equal to 1, 2, 3, or 4 is used, and $N_{CB}$ represents a number of contiguous 2.16 GHz channels. When $N_{CB}$ is 1, it indicates a 2.16 GHz channel or a 2.16+2.16 GHz channel; when $N_{CB}$ is 2, it indicates a 4.32 GHz channel or a 4.32+4.32 GHz channel; when $N_{CB}$ is 3, it indicates a 6.48 GHz channel; and when $N_{CB}$ is 4, it indicates an 8.64 GHz channel. A PPDU bandwidth configuration in a channel for which $N_{CB}$ is equal to 1, 2, 3, or 4 is shown in Table 4.

Table 4

| Parameter | Value | | | |
|---|---|---|---|---|
| | $N_{CB}$=1 | $N_{CB}$=2 | $N_{CB}$=3 | $N_{CB}$=4 |
| $N_{SD}$: number of data subcarriers | 336 | 734 | 1134 | 1532 |
| $N_{SP}$: number of pilot subcarriers | 16 | 36 | 56 | 76 |
| $N_{DC}$: number of direct current subcarriers | 3 | 3 | 3 | 3 |
| $N_{ST}$: number of subcarriers | 355 | 773 | 1193 | 1611 |
| $N_{SR}$: number of subcarriers that occupy half of a total bandwidth | 177 | 386 | 596 | 805 |
| $N_{GI\ short}$: short guard interval length | 48 | 96 | 144 | 192 |
| $N_{GI\ normal}$: normal guard interval length | 96 | 192 | 288 | 384 |
| $N_{GI\ long}$: long guard interval length | 192 | 384 | 576 | 768 |
| $\Delta F$: subcarrier frequency spacing | 5.15625 MHz | 5.15625 MHz | 5.15625 MHz | 5.15625 MHz |
| $F_S$: EDMG OFDM sampling rate | 2.64 GHz | 5.28 GHz | 7.92 GHz | 10.56 GHz |
| $T_S$: EDMG OFDM sampling duration | 0.38 ns | 0.19 ns | 0.13 ns | 0.09 ns |
| $N_{DFT}$: DFT size | 512 | 1024 | 1536 | 2048 |
| $T_{DFT}$: OFDM IDFT/DFT periodicity | 0.194 $\mu$s | 0.194 $\mu$s | 0.194 $\mu$s | 0.194 $\mu$s |
| $T_{GI}$ short: short guard interval duration | 18.18 ns | 18.18 ns | 18.18 ns | 18.18 ns |
| $T_{GI\ normal}$: normal guard interval duration | 36.36 ns | 36.36 ns | 36.36 ns | 36.36 ns |
| $T_{GI\ long}$: long guard interval duration | 72.72 ns | 72.72 ns | 72.72 ns | 72.72 ns |

In Table 5, the subcarrier frequency spacing $\Delta F$ may also be referred to as a subcarrier spacing for short, and is represented by $\Delta f$.

It should be noted that, in the channel, in addition to the subcarriers in the PPDU bandwidth, there may be other subcarriers, for example, guard subcarriers. These subcarriers are located in a blank part in FIG. 4. Due to performance limitation of a spectrum profile, these subcarriers cannot be used as a part of the PPDU bandwidth currently. Therefore, the bandwidth of the PPDU may be less than or equal to a channel width.

It can be learned from Table 4 that the number of subcarriers of the 2.16 GHz channel is 355, and the number of subcarriers of the 4.32 GHz channel is 773. A reason why the 2.16 GHz channel has 335 subcarriers is as follows: For the 2.16 GHz channel, there are 177 direct current+data+pilot subcarriers (1+177*2=355) on the left and right of direct current subcarriers in the middle of three direct current subcarriers. A reason why the 4.32 GHz channel has 773 subcarriers is as follows: For the 4.32 GHz channel, there are 386 direct current+data+pilot subcarriers (1+386*2=773) on the left and right of direct current subcarriers in three direct current subcarriers. However, the number of subcarriers of the 2.16+2.16 GHz channel is 710. With reference to FIG. 4, the number of subcarriers of the 4.32 GHz channel is greater than that of the 2.16+2.16 GHz channel because two contiguous 2.16 GHz channels are considered as a whole to consider a subcarrier distribution in the 4.32 GHz channel. As shown in FIG. 4, a shadow part in (b) in FIG. 4 is greater than a shadow part in (a) in FIG. 4.

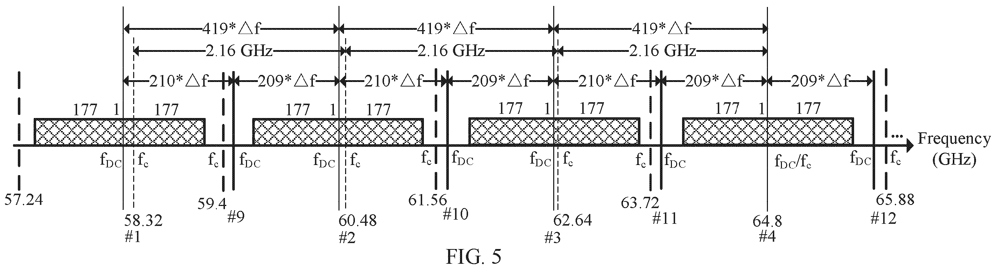

However, a set including a data subcarrier, a pilot subcarrier, and a direct current subcarrier of the 2.16+2.16 GHz channel is not a subset of a set including a data subcarrier, a pilot subcarrier, and a direct current subcarrier of the 4.32 GHz channel. The following provides descriptions with reference to FIG. 5.

FIG. 5 is a diagram of a channel distribution. As shown in FIG. 5, a shadow part is a PPDU bandwidth on a 2.16 GHz channel when $N_{CB}$=1. Because a direct current (direct current, DC) subcarrier is generally located at a central location in any PPDU bandwidth, in this application, a frequency of a subcarrier located at the central location of the PPDU bandwidth is referred to as a direct current carrier frequency ($f_{DC}$) of a PPDU, and the direct current carrier frequency of the PPDU is a direct current carrier frequency of a channel on which the PPDU bandwidth is located, and may be referred to as a direct current carrier frequency of a channel. A frequency difference between direct current carrier frequencies of any two channels is referred to as a spacing between the direct current carrier frequencies of the two channels. Similarly, a frequency difference between a direct current carrier frequency of a channel #A and a carrier center frequency of a channel #B is referred to as a spacing between the direct current carrier frequency of the channel #A and the carrier center frequency of the channel #B. As shown in FIG. 5, △f represents a subcarrier spacing, a thin dashed line is a carrier center frequency of the 2.16 GHz channel, a thin solid line is a direct current carrier frequency of the 2.16 GHz channel, a thick dashed line is a carrier center frequency of a 4.32 GHz channel, a thick solid line is a direct current carrier frequency of the 4.32 GHz channel, a spacing between carrier center frequencies of two adjacent 2.16 GHz channels is 1.08 GHz, and a spacing between direct current carrier frequencies of two adjacent 2.16 GHz channels is 419 times the subcarrier spacing △f. It can be learned from Table 4 that the subcarrier spacing is 5.15625 MHz. Therefore, the spacing between the direct current carrier frequencies of the two adjacent 2.16 GHz channels is 2.16046875 GHz. It can be learned from FIG. 5 that there are spacings between carrier center frequencies and direct current carrier frequencies of 2.16 GHz channels numbered #1 to #3, but a carrier center frequency and a direct current carrier frequency of a 2.16 GHz channel numbered #4 are the same.

According to the analysis of the 2.16 GHz channel in 802.11ay, with a given OFDM sampling frequency of 2.64 GHz and a subcarrier spacing of 5.15625 MHz, because a carrier center frequency spacing between two adjacent channels is not an integer multiple of an OFDM subcarrier spacing, for a contiguous channel such as 4.32 GHz, it is difficult to keep respective subcarrier frequencies of two involved 2.16 GHz channels aligned, no matter how subcarriers are selected. A spacing between a carrier center frequency and a direct current carrier frequency of any channel is referred to as a direct current relative shift (DC relative shift). To ensure that subcarrier frequencies of channels corresponding to different $N_{CB}$ are aligned, subcarriers are configured by using a direct current relative shift instead of a carrier center frequency of 2.16 GHz. By using the direct current relative shift, each subcarrier frequency of each channel identifier may be represented by 64.8+ΔF×n GHz, where n is an integer. This makes a spacing between direct current carrier frequencies of every two 2.16 GHz channels an integer multiple of the OFDM subcarrier spacing. In addition, channels of 4.32 GHz and higher are aligned (aligned) with the 2.16 GHz channel in terms of a subcarrier frequency. Table 5 shows direct current relative shifts for different channels in 802.11ay.

Table 5

| Number of contiguous 2.16 GHz channels Number of contiguous 2.16 GHz channels ($N_{CB}$) | Channel identifier | Carrier center frequency Center frequency of the carrier, $f_c$ (GHz) | **Direct current** subcarrier frequency DC subcarrier frequency, $f_{DC}$ (GHz) | Direct current relative shift DC relative shift, ($f_{DC\text{-}fc}$) (MHz) |
|---|---|---|---|---|
| 1 | 1 | 58.32 | 64.8-Δ$_F$×3×419 | -1.4063 |
| | 2 | 60.48 | 64.8-Δ$_F$×2×419 | -0.9375 |
| | 3 | 62.64 | 64.8-Δ$_F$×419 | -0.4688 |
| | 4 | 64.8 | 64.8 | 0 |
| | 5 | 66.96 | 64.8+Δ$_F$×419 | 0.4688 |
| | 6 | 69.12 | 64.8+Δ$_F$×2×419 | 0.9375 |
| | 7 | 71.28 | 64.8+Δ$_F$×3×419 | 1.4063 |
| | 8 | 73.44 | 64.8+Δ$_F$×4×419 | 1.8750 |
| 2 | 9 | 59.4 | 64.8-Δ$_F$×1047 | 1.4062 |
| | 10 | 61.56 | 64.8-Δ$_F$×628 | 1.8750 |
| | 11 | 63.72 | 64.8-Δ$_F$×209 | 2.3438 |
| | 12 | 65.88 | 64.8+Δ$_F$×209 | -2.3437 |
| | 13 | 68.04 | 64.8+Δ$_F$×628 | -1.8750 |
| | 14 | 70.2 | 64.8+Δ$_F$×1047 | -1.4063 |
| | 15 | 72.36 | 64.8+Δ$_F$×1466 | -0.9375 |

(continued)

| Number of contiguous 2.16 GHz channels Number of contiguous 2.16 GHz channels ($N_{CB}$) | Channel identifier | Carrier center frequency Center frequency of the carrier, $f_c$ (GHz) | **Direct current** subcarrier frequency DC subcarrier frequency, $f_{DC}$ (GHz) | Direct current relative shift DC relative shift, ($f_{DC-fc}$) (MHz) |
|---|---|---|---|---|
| 3 | 17 | 60.48 | $64.8-\Delta_F\times2\times419$ | -0.9375 |
| | 18 | 62.64 | $64.8-\Delta_F\times419$ | -0.4688 |
| | 19 | 64.8 | 64.8 | 0 |
| | 20 | 66.96 | $64.8+\Delta_F\times419$ | 0.4688 |
| | 21 | 69.12 | $64.8+\Delta_F\times2\times419$ | 0.9375 |
| | 22 | 71.28 | $64.8+\Delta_F\times3\times419$ | 1.4063 |
| 4 | 25 | 61.56 | $64.8-\Delta_F\times628$ | 1.8750 |
| | 26 | 63.72 | $64.8-\Delta_F\times209$ | 2.3438 |
| | 27 | 65.88 | $64.8+\Delta_F\times209$ | -2.3437 |
| | 28 | 68.04 | $64.8+\Delta_F\times628$ | -1.8750 |
| | 29 | 70.2 | $64.8+\Delta_F\times1047$ | -1.4063 |

It can be learned from Table 5 that most channels in 802.11ay have direct current relative shifts, and direct current relative shifts of different channels are different. Therefore, when using a channel, a station needs to first determine a direct current carrier frequency based on a carrier center frequency of the channel and the direct current relative shift in Table 5, and then determine a frequency of each subcarrier on the channel based on the direct current carrier frequency.

The foregoing uses the PPDU bandwidths of the 2.16+2.16 GHz channel and the 4.32 GHz channel as an example for description. This is also true for other channels such as 4.32+4.32 GHz and 6.48 GHz.

In conclusion, in a current subcarrier configuration in a channel, a direct current relative shift needs to be configured, and a subcarrier configuration needs to be performed by using the direct current relative shift. When determining a location of each subcarrier, a station not only needs a carrier center frequency, but also needs a direct current carrier frequency. This is relatively complex and therefore is not conducive to device implementation.

In view of this, this application provides a communication method and a communication apparatus, so that a location of each subcarrier on a channel can be determined based on a carrier center frequency of the channel instead of a direct current carrier frequency. This can reduce subcarrier configuration complexity and facilitate device implementation.

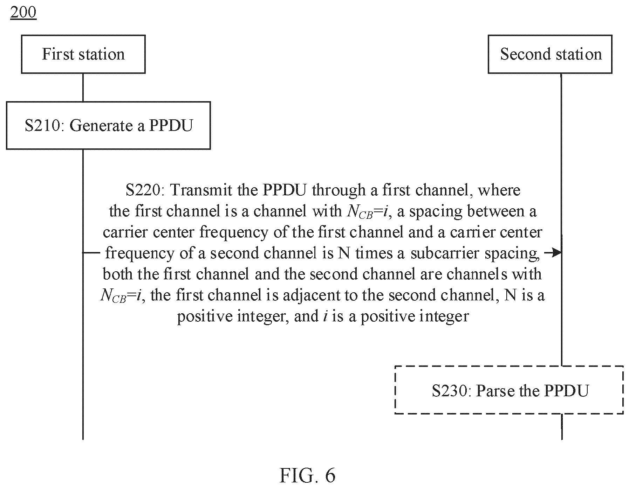

FIG. 6 is a schematic flowchart of a communication method 200 according to an embodiment of this application. For some concepts or descriptions of the method 200, refer to FIG. 1 to FIG. 5. Communication between a first station and a second station is used as an example in the communication method 200.

S210: The first station generates a physical layer protocol data unit (physical layer protocol data unit, PPDU).

The first station may be an AP, or may be a non-AP STA. This is not limited in this application.

The PPDU generated by the first station may be a PPDU in a Wi-Fi protocol. For example, the PPDU generated by the first station is a PPDU in the 802.11ad standard, and may be referred to as a DMG PPDU. For another example, the PPDU generated by the first station is a PPDU in the 802.11ay standard, and may be referred to as an EDMG PPDU. The Wi-Fi protocol includes standards such as 802.11a, 802.11b, 802.11g, 802.11n, 802.11ac, 802.11ax, 802.11be, 802.11ad, and 802.11ay, and also includes standards in a next-generation Wi-Fi protocol.

S220: The first station sends the PPDU to the second station on a first channel, and correspondingly the second station receives the PPDU on the first channel.

The second station may be an AP, or may be a non-AP STA. This is not limited in this application.

The first channel is a channel with $N_{CB}=i$, and $N_{CB}$ is a number of contiguous channels of a first width. In other words, the first channel includes one or more contiguous channels of the first width*i, and i may be a positive integer. For example, a value of i is any one of the following: 1, 2, 3, 4, 5, 6, 7, or 8. The first width may be any channel width.

Optionally, the first channel may be a non-aggregated channel, or may be an aggregated channel.

For example, if the first width is 2.16 GHz, and $N_{CB}=1$, the first channel may include one or more contiguous 2.16 GHz channels, in other words, the first channel may be a 2.16 GHz channel or a 2.16+2.16 GHz channel. For another example, if the first width is 2.16 GHz, and $N_{CB}=2$, the first channel may include one or more contiguous 4.32 GHz channels, in other words, the first channel may be a 4.32 GHz channel or a 4.32+4.32 GHz channel. For still another example, if the first width is 80 MHz, and $N_{CB}=4$, the first channel may include one or more contiguous 320 MHz channels, in other words, the first channel may be a 320 MHz channel or a 320+320 MHz channel.

Specifically, the first width may be a minimum channel width granularity. In other words, the first width is a minimum channel width. In other words, the first width is a minimum unit used for channel division, and an entire frequency band may be divided. For example, as shown in FIG. 3, the entire frequency band is a high frequency band greater than or equal to 56.16 GHz, and channel division is performed by using 2.16 GHz as a minimum unit. In this case, the first width is 2.16 GHz. For another example, for a high frequency band greater than or equal to 56.16 GHz, channel division may be performed by using 80 MHz, 160 MHz, 320 MHz, 640 MHz, 1280 MHz, 2560 MHz, or the like as a minimum unit. In this case, the first width is 80 MHz, 160 MHz, 320 MHz, 640 MHz, 1280 MHz, or 2560 MHz.

It should be understood that the foregoing is merely an example, and a value of the first width is not limited in this application.

The second channel is also a channel with $N_{CB}=i$, and the first channel is adjacent to the second channel.

Optionally, the second channel may be a non-aggregated channel, or may be an aggregated channel.

FIG. 3 is used as an example to describe the first channel and the second channel. For example, if the first width is 2.16 GHz, $N_{CB}=1$, and the first channel is a #1 channel, the second channel may be a #2 channel. For another example, if the first width is 2.16 GHz, $N_{CB}=1$, and the first channel is a #1+#2 channel, the second channel may be a #3+#4 channel, or may be a #3 channel. For another example, if the first width is 2.16 GHz, $N_{CB}=1$, and the first channel is a #1+#3 channel, the second channel may be a #2+#4 channel, or may be a #2 channel or a #4 channel. For another example, if the first width is 2.16 GHz, $N_{CB}=2$, and the first channel is a #11 channel, the second channel may be a #9 channel or a #12 channel.

In addition, a spacing between a carrier center frequency of the first channel and a carrier center frequency of the second channel is N times a subcarrier spacing, where N is a positive integer. The spacing between the carrier center frequency of the first channel and the carrier center frequency of the second channel is an integer multiple of the subcarrier spacing.

It should be understood that, if either the first channel or the second channel is an aggregated channel, the carrier center frequency of the first channel and the carrier center frequency of the second channel are carrier center frequencies of independent channels forming the aggregated channel.

FIG. 3 is still used as an example to describe the spacing between the carrier center frequency of the first channel and the carrier center frequency of the second channel. For example, if the first width is 2.16 GHz, $N_{CB}=1$, the first channel is the #1 channel, and the second channel is the #2 channel, the spacing between the carrier center frequency of the first channel and the carrier center frequency of the second channel is a frequency spacing between the #1 channel and the #2 channel. For another example, if the first width is 2.16 GHz, $N_{CB}=1$, the first channel is the #1+#2 channel, and the second channel is the #3+#4 channel, the spacing between the carrier center frequency of the first channel and the carrier center frequency of the second channel is a frequency spacing between the #1 channel and the #3 channel or a frequency spacing between the #2 channel and the #4 channel. For another example, if the first width is 2.16 GHz, $N_{CB}=1$, the first channel is the #1+#3 channel, and the second channel is the #2+#4 channel, the spacing between the carrier center frequency of the first channel and the carrier center frequency of the second channel is a frequency spacing between the #1 channel and the #2 channel or a frequency spacing between the #3 channel and the #4 channel. For another example, if the first width is 2.16 GHz, $N_{CB}=1$, the first channel is the #1+#3 channel, and the second channel is the #4 channel, the spacing between the carrier center frequency of the first channel and the carrier center frequency of the second channel is a frequency spacing between the #1 channel and the #4 channel or a frequency spacing between the #3 channel and the #4 channel. For another example, if the first width is 2.16 GHz, $N_{CB}=2$, the first channel is the #11 channel, and the second channel is the #9 channel or a #13 channel, the spacing between the carrier center frequency of the first channel and the carrier center frequency of the second channel is a frequency spacing between the #9 channel and the #11 channel or a frequency spacing between the #11 channel and the #13 channel.

Optionally, the entire frequency band is evenly divided by using the first bandwidth as a granularity, and the subcarrier spacing is a fixed value. In this case, the spacing between the carrier center frequency of the first channel and the carrier center frequency of the second channel may be equal to the first width. In this case, the spacing between the carrier center frequency of the first channel and the carrier center frequency of the second channel is N times the subcarrier spacing. In other words, the first width is N times the subcarrier spacing.

Based on the solution in the foregoing embodiment, the first station and the second station may transmit information on the first channel. Because a spacings between the carrier center frequency of the first channel and the carrier center frequency of the second channel are integer multiples of the subcarrier spacing, when using a channel, a station may determine a location of each subcarrier on the channel based on a carrier center frequency of the channel instead of a direct current carrier frequency. This can avoid a direct current relative shift, reduce device implementation complexity, and facilitate device implementation.

Optionally, the method further includes: S230: The second station parses the PPDU.

For example, parsing the PPDU by the second station may be parsing data carried in the PPDU.

Optionally, a width of the PPDU is less than or equal to a width of the first channel.

Specifically, the bandwidth of the PPDU is a bandwidth occupied by a data subcarrier, a pilot subcarrier, and a direct current subcarrier on a channel. The bandwidth of the PPDU depends on a spectrum profile, and may be close to or equal to the width of the first channel.

Optionally, the method 200 may be applied to a frequency band greater than or equal to 45 GHz.

Specifically, the frequency band greater than or equal to 45 GHz may be a frequency band greater than or equal to 56.16 GHz. In other words, the method 200 may be applied to the channel configuration scenario shown in FIG. 3.

A standard greater than or equal to 45 GHz may include but is not limited to the DMG standard, the EDMG standard, the China directional multi-gigabit (China directional multi-gigabit, CDMG) standard, the China millimeter-wave multi-gigabit (China millimeter-wave multi-gigabit, CMMG) standard, or the like.

For example, the carrier center frequency of the first channel is greater than or equal to 45 GHz.

Optionally, N is a product of M elements in a first real number set, and M is a positive integer. It is assumed that M is less than or equal to a total number of elements in the first real number set.

In an implementation, the spacing between the carrier center frequency of the first channel and the carrier center frequency of the second channel is an odd multiple of the subcarrier spacing. In this case, the M elements are all odd numbers. In other words, M odd numbers may be selected from the first real number set, and N is a product of the M odd numbers, so that the spacing between the carrier center frequency of the first channel and the carrier center frequency of the second channel is an odd multiple of the subcarrier spacing.

In an implementation, the spacing between the carrier center frequency of the first channel and the carrier center frequency of the second channel is an even multiple of the subcarrier spacing. In this case, at least one of the M elements is an even number. In other words, the M elements may be selected from the first real number set, at least one of the M elements is an even number, and N is a product of the M elements, so that the spacing between the carrier center frequency of the first channel and the carrier center frequency of the second channel is an even multiple of the subcarrier spacing.

The first real number set is a set consisting of factors obtained by performing factorization based on a first value X. Details are as follows:

In an implementation, $X = |f_{c1} - f_{c2}|$, where $f_{c1}$ is the carrier center frequency of the first channel, and $f_{c2}$ is the carrier center frequency of the second channel. In other words, the first value X is a frequency value of the spacing between the carrier center frequency of the first channel and the carrier center frequency of the second channel.

Optionally, all elements in the first real number set are prime numbers.

For example, it is assumed that the frequency value of the spacing between the carrier center frequency of the first channel and the carrier center frequency of the second channel is 2.16 GHz, and factorization is performed on 2.16 GHz in a unit of Hz, that is, 2.16 GHz=$(3^3)*(2^{10})*(5^7)$ Hz. To be specific, factors obtained by performing factorization on 2.16 GHz are 3, 3, 3, 2, 2, 2, 2, 2, 2, 2, 2, 2, 2, 5, 5, 5, 5, 5, 5, 5. Therefore, the first real number set is {3, 3, 3, 2, 2, 2, 2, 2, 2, 2, 2, 2, 2, 5, 5, 5, 5, 5, 5, 5}, and includes 20 elements in total. N may be a product of M of the elements, and M is less than 20.

To enable the spacing between the carrier center frequency of the first channel and the carrier center frequency of the second channel to be an odd multiple of the subcarrier spacing, one or more elements may be selected from {3, 3, 3, 5, 5, 5, 5, 5, 5, 5}. Currently, an appropriate subcarrier spacing of a high frequency is generally greater than or equal to 1 MHz and lesss than or equal to dozens of MHz. Therefore, some examples of selected N are as follows:

N=3*3*3*5*5=675. In this case, subcarrier spacing=2.16 GHz/675=3.2 MHz.
N=5*5*5*5=625. In this case, subcarrier spacing=2.16 GHz/625=3.456 MHz.
N=3*5*5*5=375. In this case, subcarrier spacing=2.16 GHz/375=5.75 MHz.
N=3*3*5*5=225. In this case, subcarrier spacing=2.16 GHz/225=9.6 MHz.
N=3*3*3*5=135. In this case, subcarrier spacing=2.16 GHz/135=16 MHz.
N=5*5*5=125. In this case, subcarrier spacing=2.16 GHz/125=17.28 MHz.

To enable the spacing between the carrier center frequency of the first channel and the carrier center frequency of the second channel to be an even multiple of the subcarrier spacing, one or more elements may be selected from {3, 3, 3, 2, 2, 2, 2, 2, 2, 2, 2, 2, 2, 5, 5, 5, 5, 5, 5, 5}, and at least one "2" is included. Currently, an appropriate subcarrier spacing of a high frequency is generally greater than or equal to 1 MHz and lesss than or equal to dozens of MHz. Therefore, some examples of selected N are as follows:

N=2^9=512. In this case, subcarrier spacing=2.16 GHz/512=4.21875 MHz.
N=2*2*5*5*5=500. In this case, subcarrier spacing=2.16 GHz/500=4.32 MHz.
N=2^7*3=384. In this case, subcarrier spacing=2.16 GHz/384=5.625 MHz.
N=2*2*2*2*5*5=400. In this case, subcarrier spacing=2.16 GHz/400=5.4 MHz.
N=2*2*2*2*2*5=320. In this case, subcarrier spacing=2.16 GHz/320=6.75 MHz.
N=2^8=256. In this case, subcarrier spacing=2.16 GHz/256=8.4375 MHz.
N=2*5*5*5=250. In this case, subcarrier spacing=2.16 GHz/250=8.64 MHz.
N=2*2*2*5*5=200. In this case, subcarrier spacing=2.16 GHz/200=10.8 MHz.

In this implementation, factorization is performed by using $X=|f_{c1}-f_{c2}|$, and N is the product of the M elements in the first real number set. Therefore, a value of the subcarrier spacing is a product of remaining elements in the first real number set. Because a unit of X is an integer of Hz or MHz, the value of the subcarrier spacing may also be an integer in a unit of Hz or MHz. This facilitates device implementation.

It should be understood that, in the solution of this application, factorization may be performed on the frequency value in a unit of Hz, kHz, or MHz, or factorization may be performed on the frequency value in a unit of GHz. This is not limited in this application. In the foregoing example, the unit of X is Hz during factorization.

In another implementation, $X$=first width*number of sampling points*$10^n$. In other words, the first value X is $10^n$ times a product of the first width and the number of sampling points, where n represents a number of decimal places of a sampling frequency, and n is an integer. For example, n=0, 1, 2, 3, ... The number of sampling points may be $2^{n_2}$, and $n_2$ is an integer. For example, $n_2$=5, 6, 7, 8, 9, or 10, and the number of sampling points may be 32, 64, 128, 256, 512, or 1024. The first width and the sampling frequency each may be in a unit of GHz.

Because

$$\text{Subcarrier spacing} = \frac{\text{Sampling frequency}}{\text{Number of sampling points}},$$

$$N = \frac{\text{First width}}{\text{Subcarrier spacing}} = \frac{\text{First width} * \text{Number of sampling points}}{\text{Sampling frequency}}.$$

To enable a value of the sampling frequency z to be simple, for example, if the sampling frequency is in a unit of GHz and a maximum of two decimal places are obtained, n is 2, factorization is performed on a result of first width*number of sampling points*100, and obtained factors may form the first real number set. A value of the number of sampling points may be 256.

For example, if the first width is 2.16 GHz, and the number of sampling points is 512, N=2.16 GHz/(z/512), that is, N=2.16*512/z, that is, N=1105.92/z. Both the numerator and denominator are multiplied by 100. In this case, 100z becomes an integer. That is, N*100z=110592. Because factorization is 110592=$(3^3)*(2^{12})$, that is, factors obtained by performing factorization on X=2.16 GHz*512*100 are 3, 3, 3, 2, 2, 2, 2, 2, 2, 2, 2, 2, 2, 2, 2, the first real number set is {3, 3, 3, 2, 2, 2, 2, 2, 2, 2, 2, 2, 2, 2, 2}, and includes 15 elements in total. N may be a product of M of the elements, and M is less than 15.

To enable the spacing between the carrier center frequency of the first channel and the carrier center frequency of the second channel to be an odd multiple of the subcarrier spacing, one or more elements may be selected from {3, 3, 3}. Therefore, a value of N is 3, 9, or 27. Corresponding subcarrier spacings may be 2.16 GHz/3=720 MHz, 2.16 GHz/9=240 MHz, and 2.16 GHz/27=80 MHz respectively.

To enable the spacing between the carrier center frequency of the first channel and the carrier center frequency of the second channel to be an even multiple of the subcarrier spacing, one or more elements may be selected from {3, 3, 3, 2, 2, 2, 2, 2, 2, 2, 2, 2, 2, 2, 2}, and at least one "2" is included. Currently, an appropriate subcarrier spacing of a high frequency is generally greater than or equal to 1 MHz and lesss than or equal to dozens of MHz. The following provides a simple example:

$N=3*2^7=384$. In this case, subcarrier spacing=2.16 GHz/384=5.625 MHz, and z=5.625*512=2.88 GHz.

In this implementation, factorization is performed on a result of X=first width*number of sampling points*$10^n$, and N is the product of the M elements in the first real number set. Therefore, a value of the sampling frequency is a product of remaining elements in the first real number set. Because X is in a unit of GHz, the sampling frequency may also be in a unit of GHz, and a value of the sampling frequency is relatively simple.

Further, because

$$\text{Subcarrier spacing} = \frac{\text{Sampling frequency}}{\text{Number of sampling points}},$$

a value of the subcarrier spacing may also be an integer in a unit of Hz or MHz. This facilitates device implementation.

It should be understood that, when the spacing between the carrier center frequency of the first channel and the carrier center frequency of the second channel is an even multiple of the subcarrier spacing, the first width and the sampling frequency may be the same, for example, both are 2.16 GHz. In this case, a number $2^n$ of points may be set. For example, there are 256 subcarriers (subcarrier spacing=2.16 GHz/256=8.7375 MHz) and 512 subcarriers (subcarrier spacing=2.16 GHz/512=4.21875 MHz) between 2.16 GHz and 2.16 GHz.

It should be further understood that, in the foregoing example, when the value of the subcarrier spacing is determined, an example in which the minimum unit used for channel division is 2.16 GHz is used for description. However, this application is not limited thereto. The minimum unit used for channel division may alternatively be 80 MHz, or the minimum unit used for channel division may be an integer multiple of 80 MHz, for example, may be any one of 160 MHz, 320 MHz, 640 MHz, 1280 MHz, or 2560 MHz. For a method for determining the value of N and the value of the subcarrier spacing, refer to the foregoing example. For example, if the minimum unit used for channel division is 80 MHz, factorization may be performed on 80*$10^6$ Hz, or factorization may be performed on 80*number of sampling points*$10^n$, where factorization of 80*$10^6$ includes the following factors {5, 5, 5, 5, 5, 5, 5, 2, 2, 2, 2, 2, 2, 2, 2, 2, 2}. Further, N may be determined based on the factors of factorization. Further, the subcarrier spacing may be determined based on N and the channel bandwidth 80 MHz.

In addition, in the solution of this application, factorization may be performed on the frequency value in a unit of Hz, kHz, or MHz, or factorization may be performed on the frequency value in a unit of GHz. This is not limited in this application. In an example of this implementation, the unit of X is GHz during factorization.

Optionally, in any one of the foregoing implementations, the obtained value of the subcarrier spacing may be further rounded, for example, may be rounded off, rounded up, or rounded down, or a limited number of decimal places are reserved.

Optionally, in an implementation, a direct current carrier frequency of the first channel is the same as the carrier center frequency of the first channel; or a spacing between the direct current carrier frequency of the first channel and the carrier center frequency of the first channel is 0.5 times the subcarrier spacing. It should be understood that the direct current carrier frequency of the channel is a frequency center location of the bandwidth of the PPDU.

Optionally, a third channel is a channel with $N_{CB}=i+1$, and a spacing between a direct current carrier frequency of the third channel and the direct current carrier frequency of the first channel is an integer multiple of the subcarrier spacing. For example, the spacing between the direct current carrier frequency of the third channel and the direct current carrier frequency of the first channel is an odd multiple or an even multiple of the subcarrier spacing.

In an implementation, one subcarrier of the third channel and one subcarrier of the first channel have a same frequency location.

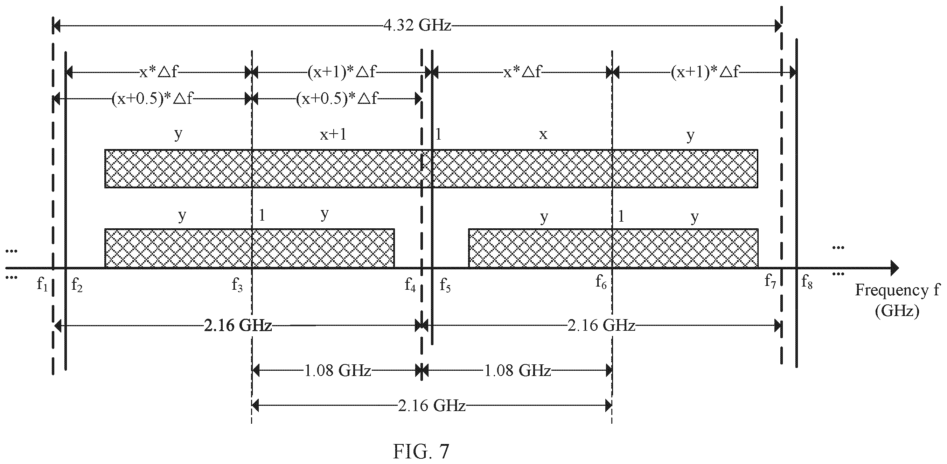

The following describes a channel distribution and a PPDU distribution in the method 200 with reference to FIG. 7 to FIG. 10.

FIG. 7 is a diagram of a channel distribution according to an embodiment of this application. As shown in FIG. 7, $\triangle f$ represents a subcarrier spacing, and channel division is performed in a unit of 2.16 GHz. In the figure, a thin dashed line is a carrier center frequency of a 2.16 GHz channel, and is also a direct current carrier frequency of the 2.16 GHz channel, a thick dashed line is a carrier center frequency of a 4.32 GHz channel, a thick solid line is a direct current carrier frequency of the 4.32 GHz channel, and a shadow part is a PPDU bandwidth of each channel.

A spacing between a carrier center frequency $f_3$ of a left 2.16 GHz channel and a carrier center frequency $f_6$ of a right 2.16 GHz channel is $N^*\triangle f=(2x+1)^*\triangle f$. The carrier center frequencies of the left and right 2.16 GHz channels are the same as direct current carrier frequencies of the channels.

A direct current carrier frequency $f_5$ of a 4.32 GHz channel may be between the carrier center frequency $f_3$ of the left 2.16 GHz channel and the carrier center frequency $f_6$ of the right 2.16 GHz channel, and a spacing between $f_5$ and $f_3$ or $f_6$ is an integer multiple of the subcarrier spacing. Assuming that the spacing between $f_5$ and $f_3$ is $n_1$ times the subcarrier spacing, $f_5=f_3+n_1^*\triangle f$ If $f_5$ may coincide with $f_6$, a value of $n_1$ may be 0, 1, 2, 3, ..., or N, that is, $f_5$ has N+1 optional locations in total.

In the example shown in FIG. 7, N=2x+1(x≥1), that is, the spacing between the carrier center frequency $f_3$ of the left 2.16 GHz channel and the carrier center frequency $f_6$ of the right 2.16 GHz channel is an odd multiple of the subcarrier spacing, and the value of $n_1$ is x+1. Therefore, the direct current carrier frequency $f_5$ of the 4.32 GHz channel is on the right of a carrier center frequency $f_4$ of the 4.32 GHz channel, and a spacing between $f_5$ and $f_4$ is less than $\triangle f$. In this case, because a value of x+1 may be an odd number or an even number, the spacing between $f_5$ and $f_3$ may be an odd multiple of the subcarrier spacing or an even multiple of the subcarrier spacing. Similarly, because a value of x may be an odd number or an even number, the spacing between $f_5$ and $f_6$ may be an odd multiple of the subcarrier spacing or an even multiple of the subcarrier spacing. In addition, a difference between $f_5$ and $f_4$ is $0.5^*\triangle f$.

As shown in FIG. 7, in the foregoing example, a PPDU bandwidth (namely, a shadow part) of the 2.16 GHz channel may include (1+2y) subcarriers, and the PPDU bandwidth of the 2.16 GHz channel may be $(1+2y)^*\triangle f$, where y is less than or equal to x. For example, if the PPDU bandwidth supported by the 2.16 GHz channel is within 1.88 GHz, to adapt to this, 2y+1 may satisfy $(2y+1)^*\triangle f≤1.88$ GHz. It should be understood that a specific value of y is related to performance of a spectrum profile, and an excessively large PPDU bandwidth requires better performance of the spectrum profile and has a relatively high requirement on a device.

Further, a number of subcarriers included in a PPDU bandwidth of the 4.32 GHz channel may be 1+(x+1)+(x)+y+(y-1)=1+2x+2y, or may be 1+(x+1)+(x)+y+y=2+2x+2y. Herein, 1 is a subcarrier (denoted as a subcarrier #0) on which a direct current carrier frequency is located, x+1 is a number of subcarrier spacings between the subcarrier #0 and $f_3$, x is a number of subcarrier spacings between the subcarrier #0 and $f_6$, and y is a number of subcarrier spacings on the left of $f_3$ or on the right of $f_6$ on the PPDU bandwidth. If it needs to be ensured that quantities of subcarriers on the left and right of the subcarrier #0 on the PPDU bandwidth are the same, a 1+2x+2y subcarrier distribution manner may be used to distribute direct current+pilot+data subcarriers. If quantities of direct current+pilot+data subcarriers on the left and right of the subcarrier #0 are allowed to be inconsistent, a 2+2x+2y manner may be used.

Optionally, in another example similar to FIG. 7, the value of $n_1$ may alternatively be x. In this case, $f_5$ is on the left of $f_4$, and the difference between $f_5$ and $f_4$ is $0.5^*\triangle f$.

In any one of the foregoing examples, the left 2.16 GHz channel may be used as an example of a first channel, and the right 2.16 GHz channel may be used as an example of a second channel, and vice versa. In addition, 4.32 GHz may be used as an example of a third channel.

Optionally, 4.32 GHz may alternatively be used as an example of the first channel, that is, the first channel is a channel with $N_{CB}$=2. In this case, $f_1$ and $f_7$ are carrier center frequencies of 4.32 GHz channels with different channel numbers, and $f_2$ and $f_8$ may be used as direct current carrier frequencies of 4.32 GHz channels with different channel numbers. Therefore, direct current relative shifts of 4.32 GHz channels with different channel numbers are the same, for example, are all 0.5*$\triangle$f.

The foregoing method is also applicable to a channel with $N_{CB}$>2. For example, for a channel with $N_{CB}$=3, a direct current carrier frequency may be a carrier center frequency of a 2.16 GHz channel in the middle of three 2.16 GHz channels on the left, in the middle, and on the right, that is, $f_3$ or $f_6$. For another example, for a channel with $N_{CB}$=3, a direct current carrier frequency is between $f_3$ and $f_6$, that is, may still be $f_5$.

Based on the foregoing solution, because a frequency spacing between carrier center frequencies of two adjacent channels is an integer multiple of an OFDM subcarrier spacing, a subcarrier configuration may be performed based on a carrier center frequency, and no direct current relative shift is required. This can reduce channel use complexity and facilitate device implementation.

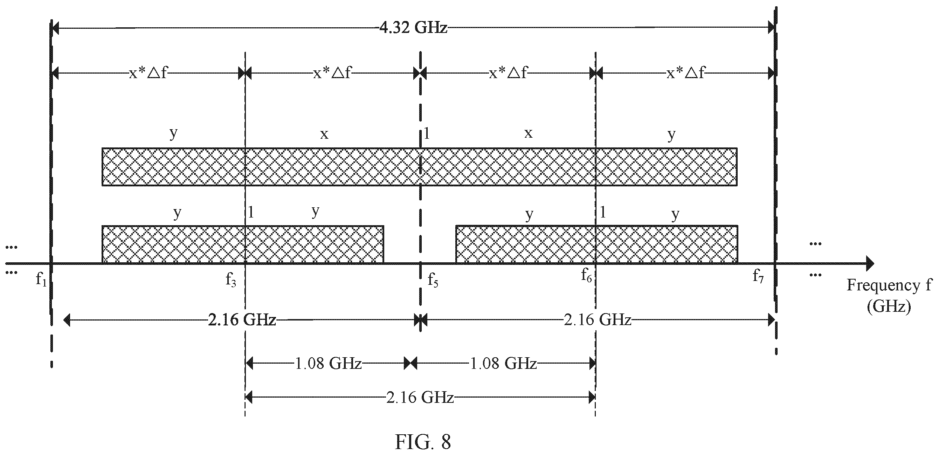

FIG. 8 is a diagram of another channel distribution according to an embodiment of this application. For explanations and descriptions of FIG. 8, refer to FIG. 7. The following mainly describes a difference between FIG. 8 and FIG. 7. In FIG. 8, a spacing between a carrier center frequency $f_3$ of a left 2.16 GHz channel and a carrier center frequency $f_6$ of a right 2.16 GHz channel is an even multiple of a subcarrier spacing, that is, N*$\triangle$f=(2x)*$\triangle$f. Therefore, a direct current carrier frequency $f_5$ of a 4.32 GHz channel may coincide with a carrier center frequency $f_4$ of the 4.32 GHz channel.

In addition, as shown in FIG. 8, a number of subcarriers included in a PPDU bandwidth of the 4.32 GHz channel may be 1+x+x+y+(y-1)=2x+2y, or may be 1+x+x+y+y=1+2x+2y. If it needs to be ensured that quantities of subcarriers on the left and right of the subcarrier #0 on the PPDU bandwidth are the same, a 1+2x+2y subcarrier distribution manner may be used to distribute direct current+pilot+data subcarriers. If quantities of direct current+pilot+data subcarriers on the left and right of the subcarrier #0 are allowed to be inconsistent, a 2x+2y manner may be used.

Optionally, in another example similar to FIG. 7, the value of $n_1$ may alternatively be x. In this case, $f_5$ is on the left of $f_4$, and the difference between $f_5$ and $f_4$ is 0.5*$\triangle$f.

In any one of the foregoing examples, the left 2.16 GHz channel may be used as an example of a first channel, and the right 2.16 GHz channel may be used as an example of a second channel, and vice versa. In addition, 4.32 GHz may be used as an example of a third channel.

Optionally, 4.32 GHz may alternatively be used as an example of the first channel, that is, the first channel is a channel with $N_{CB}$=2. In this case, $f_1$ and $f_7$ are carrier center frequencies of 4.32 GHz channels with different channel numbers, or may be used as direct current carrier frequencies of 4.32 GHz channels with different channel numbers. Therefore, each 4.32 GHz channel may have no direct current relative shift.

In addition, in the example of FIG. 8, one subcarrier of the 2.16 GHz channel and one subcarrier of the 4.32 GHz channel have a same frequency location. Optionally, each subcarrier in the 2.16 GHz channel and one subcarrier in the 4.32 GHz channel may correspond to each other and have a same frequency location. In other words, a set consisting of subcarriers of the 2.16 GHz channel may be a subset of a set consisting of subcarriers of the 4.32 GHz channel.

Based on the foregoing solution, because a frequency spacing between carrier center frequencies of two adjacent channels is an integer multiple of an OFDM subcarrier spacing, a subcarrier configuration may be performed based on a carrier center frequency, and no direct current relative shift is required. This can reduce channel use complexity and facilitate device implementation.

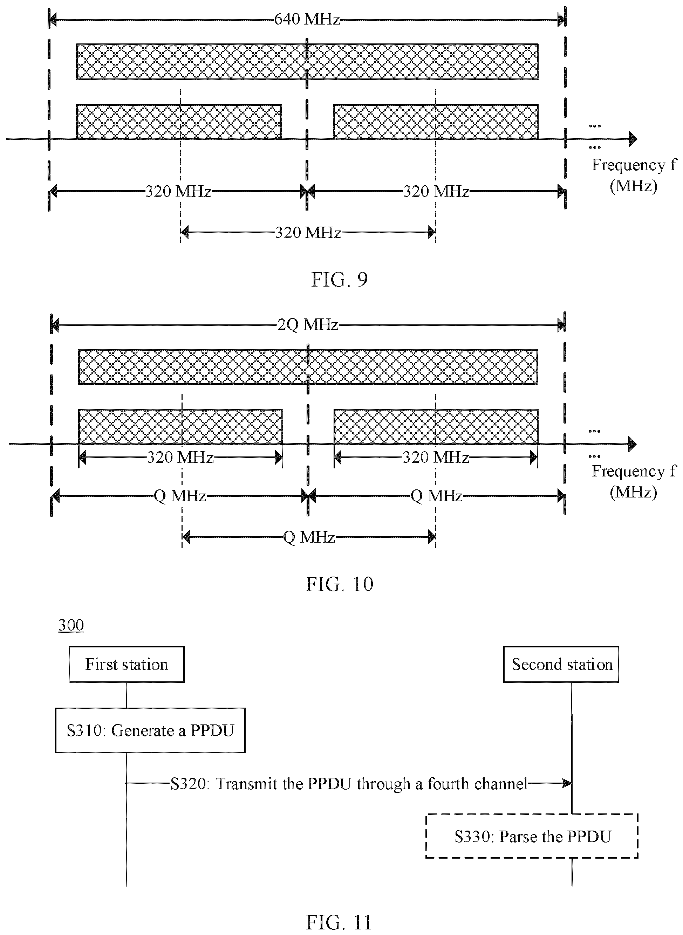

It should be understood that, in the examples in FIG. 7 and FIG. 8, 2.16 GHz is used as a minimum unit for channel division. This is merely an example, and does not constitute a limitation on this application. For example, the minimum unit for channel division may alternatively be 80 MHz, 160 MHz, 320 MHz, 640 MHz, 1280 MHz, or 2560 MHz. The following uses an example in which the minimum unit for channel division is 320 MHz for description with reference to FIG. 9 and FIG. 10.

FIG. 9 is a diagram of another channel distribution according to an embodiment of this application. As shown in FIG. 9, channel division is performed in a unit of 320 MHz. In FIG. 9, a thin dashed line is a carrier center frequency of a 320 MHz channel, a thick dashed line is a carrier center frequency of a 640 MHz channel, and a shadow part is a PPDU bandwidth of each channel. A spacing between a carrier center frequency of a left 320 MHz channel and a carrier center frequency of a right 320 MHz channel may be an integer multiple of a subcarrier spacing, and direct current carrier frequencies of the left and right 320 MHz channels may be the same as the carrier center frequencies of the channels. After the direct current carrier frequency of the 320 MHz channel is determined, a spacing between a direct current carrier frequency of the 640 MHz channel and the direct current carrier frequency of the 320 MHz channel may be an integer multiple of the subcarrier spacing. Similar to FIG. 7, the spacing between the carrier center frequency of the left 320 MHz channel and the carrier center frequency of the right 320 MHz channel may be an odd multiple of the subcarrier spacing, and a spacing between the direct current carrier frequency of the 640 MHz channel and the carrier center frequency of the 640 MHz channel may be 0.5 times the subcarrier spacing. Similar to FIG. 8, the spacing between the carrier center frequency of the left 320 MHz channel and the carrier center frequency of the right 320 MHz channel may be an even multiple of the subcarrier spacing, and the direct current carrier frequency of the 640 MHz channel may coincide with the carrier center frequency of the 640 MHz channel. A size of a PPDU bandwidth of the 320 MHz channel is related to a limitation such as performance of a spectrum profile. If a condition permits, the PPDU bandwidth may also be close to or equal to a channel width 320 MHz.

FIG. 10 is a diagram of another channel distribution according to an embodiment of this application. As shown in FIG. 10, channel division may be performed in a unit of Q MHz, so that a PPDU bandwidth is 320 MHz, where Q is an integer, and a value of Q depends on performance of a spectrum profile. This is not limited in this application. In FIG. 10, a thin dashed line is a carrier center frequency of a Q MHz channel, a thick dashed line is a carrier center frequency of a 2Q MHz channel, and a shadow part is a PPDU bandwidth of each channel. A spacing between a carrier center frequency of a left Q MHz channel and a carrier center frequency of a right Q MHz channel may be an integer multiple of a subcarrier spacing, and direct current carrier frequencies of the left and right Q MHz channels may be the same as carrier center frequencies of the channels. After the direct current carrier frequency of the Q MHz channel is determined, a spacing between a direct current carrier frequency of the 2Q MHz channel and the direct current carrier frequency of the Q MHz channel may be an integer multiple of the subcarrier spacing. Similar to FIG. 7, the spacing between the carrier center frequency of the left Q MHz channel and the carrier center frequency of the right Q MHz channel may be an odd multiple of the subcarrier spacing, and a spacing between the direct current carrier frequency of the 2Q MHz channel and a carrier center frequency of the 2Q MHz channel may be 0.5 times the subcarrier spacing. Similar to FIG. 8, the spacing between the carrier center frequency of the left Q MHz channel and the carrier center frequency of the right Q MHz channel may be an even multiple of the subcarrier spacing, and the direct current carrier frequency of the 2Q MHz channel may coincide with the carrier center frequency of the 2Q MHz channel. A size of a PPDU bandwidth of the Q MHz channel is related to a limitation such as performance of a spectrum profile. If a condition permits, the PPDU bandwidth may also be close to or equal to a channel width Q MHz.

It should be understood that, in the examples in FIG. 7 to FIG. 10, 2.16 GHz, 4.32 GHz, 320 MHz, 640 MHz, Q MHz, 2Q MHz, or the like may be a non-aggregated channel, or may be used as a part of an aggregated channel.

FIG. 11 is a schematic flowchart of a communication method 300 according to an embodiment of this application. For some concepts or descriptions of the method 300, refer to FIG. 1 to FIG. 6.

S310: A first station generates a PPDU.

For descriptions of S310, refer to S210. Details are not described herein again.

S320: The first station sends the PPDU to a second station on a fourth channel, and correspondingly the second station receives the PPDU on the fourth channel.

Optionally, the method 300 further includes: The second station parses the PPDU.

For descriptions of S330, refer to S230. Details are not described herein again.

In an embodiment of the method 300, the fourth channel in the method 300 is described as follows:

In this embodiment, a spacing between a direct current carrier frequency of the fourth channel and a direct current carrier frequency of a fifth channel is not equal to a spacing between a carrier center frequency of the fourth channel and a direct current carrier frequency of a sixth channel, the fourth channel, the fifth channel, and the sixth channel are all channels with $N_{CB}=i$, the fourth channel is adjacent to the fifth channel, and the fourth channel is adjacent to the sixth channel. For example, a channel number of the fourth channel is #a, a channel number of the fifth channel is #(a-1), and a channel number of the sixth channel is #(a+1), where a is an integer In other words, spacings between direct current carrier frequencies of adjacent channels are not necessarily the same.

Optionally, the fourth channel, the fifth channel, and the sixth channel in this embodiment are all channels with $N_{CB}=1$, that is, channel widths of the fourth channel, the fifth channel, and the sixth channel are all equal to a first width. For specific explanations of "channel with $N_{CB}=i$", refer to the method 200. Details are not described herein again.

In this manner, a direct current relative shift can be better controlled within a specific range. For example, the direct current relative shift may be controlled within a range of 0.5 times a subcarrier spacing.

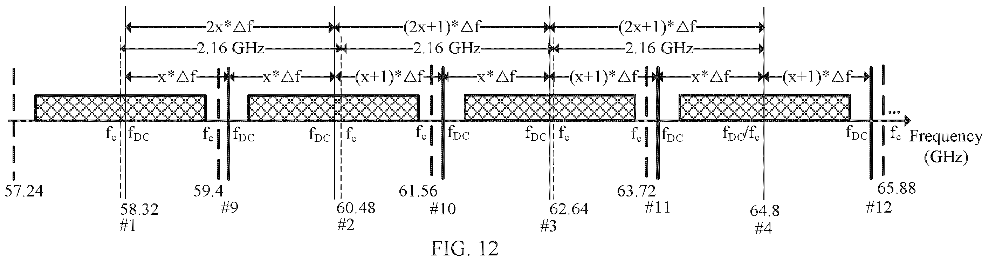

The following uses an example to describe this embodiment with reference to FIG. 12.

FIG. 12 is a diagram of another channel distribution according to an embodiment of this application. Similar to FIG. 5, in FIG. 12, a thin dashed line is a carrier center frequency of a 2.16 GHz channel, a thin solid line is a direct current carrier frequency of the 2.16 GHz channel, a thick dashed line is a carrier center frequency of a 4.32 GHz channel, a thick solid line is a direct current carrier frequency of the 4.32 GHz channel, and a shadow part is a PPDU bandwidth of each channel. A difference from FIG. 5 lies in that a spacing between direct current carrier frequencies of adjacent 2.16 GHz channels may be (2x+1) subcarrier spacings. For example, a spacing between a #2 channel (an example of a fourth channel) and a #3 channel (an example of a sixth channel) may be 2x subcarrier spacings. For example, a spacing between a #1 channel (an example of a fifth channel) and the #2 channel may be a subcarrier spacing of another multiple. This is not limited. In other words, spacings between direct current carrier frequencies of adjacent channels are not necessarily the same. Further, in this manner, a difference between a direct current carrier frequency of each channel and a carrier center frequency of the channel may be less than or equal to 0.5 times a subcarrier spacing, and the direct current carrier frequency of each channel may be greater than the carrier center frequency of the channel, or may be less than the carrier center frequency of the channel. In FIG. 12, spacings between a carrier center frequency of a #4 channel and direct current carrier frequencies of the #3 channel, the #2 channel, and the #1 channel are respectively ((2x+1)△f-2.16), 2((2x+1)△f-2.16), and ((6x+2)△f-6.48), a spacing between the direct current carrier frequency of the #3 channel and the carrier center frequency of the #4 channel is ((2x+1)△f-2.16), a spacing between the direct current carrier frequency of the #2 channel and a carrier center frequency of the #3 channel is ((2x+1)△f-2.16), and a spacing between the direct current carrier frequency of the #1 channel and a carrier center frequency of the #2 channel is ((2x)△f-2.16). In other words, spacings between direct current carrier frequencies of adjacent channels are not necessarily the same. Therefore, a direct current relative shift of the #1 channel in FIG. 12 is less than that in FIG. 5.

In this application, a frequency point used to determine a direct current carrier frequency of another channel may be referred to as a reference point, a frequency of the reference point may also be referred to as an anchor frequency, and a subcarrier on the frequency of the reference point may be referred to as an anchor subcarrier. Generally, a carrier center frequency of a channel whose carrier center frequency is the same as a direct current carrier frequency may be used as a reference point. In FIG. 12, the carrier center frequency of the #4 channel is used as a reference point.

It should be understood that, in FIG. 5, a spacing between direct current carrier frequencies of the #1 channel and the #2 channel, a spacing between direct current carrier frequencies of the #2 channel and the #3 channel, and a spacing between direct current carrier frequencies of the #3 channel and the#4 channel are all (2x+1)△f, that is, spacings between adjacent direct current carrier frequencies are equal; and the spacings between the carrier center frequency of the #4 channel and the direct current carrier frequencies of the #3 channel, the #2 channel, and the #1 channel are respectively (419△f-2.16), 2(419△f-2.16), and 3(419△f-2.16) GHz. Therefore, a longer distance from the reference point indicates a larger spacing between the direct current carrier frequency and the carrier center frequency of each of the #3 channel, the #2 channel, and the #1 channel. In 802.11ay, a solution in which spacings between direct current carrier frequencies of adjacent channels are equal (all are 419△f-2.16) may be used because (419△f-2.16)/△f=0.00046875/0.00515625≈0.091, that is, a deviation is not large each time, and a deviation of about one subcarrier spacing is caused only when a number of times is greater than 11 (1/0.091≈11). However, in a case of different △f and channel widths, the deviation is not necessarily so small. For example, it is assumed that the following relationship exists: (spacing between direct current carrier frequencies of adjacent channels-channel width)/△f=0.4. In this case, if the reference point is used as a reference, the deviation is greater than one subcarrier spacing when the deviation is repeated for three times. In this embodiment, spacings between direct current carrier frequencies of adjacent channels are not equal, so that direct current relative shifts of some channels can be reduced, for example, the direct current relative shifts of the channels may not exceed 0.5 times of the subcarrier spacing.

It should be understood that, in this embodiment, a location of the reference point is not limited. The reference point may be located on a channel in the middle of an entire frequency band. For example, in FIG. 5 and FIG. 12, the reference point is located on the direct current carrier frequency of the #4 channel. Optionally, the location of the reference point may be another location, for example, a lowest-frequency channel, a highest-frequency channel, or another frequency location, for example, the carrier center frequency of the 4.32 GHz channel, that is, 59.4 GHz.

Optionally, there may be a plurality of reference points, and each reference point is used to determine a direct current relative shift of one or more channels.

In addition, FIG. 12 is merely an example. In FIG. 12, a thick solid line is first determined by using an odd multiple of a subcarrier spacing and then a thin solid line is determined by using an even multiple of the subcarrier spacing from the reference point to two sides. Optionally, a thick solid line may be first determined by using an even multiple of a subcarrier spacing and then a thin solid line is determined by using an odd multiple of the subcarrier spacing from the reference point to two sides. This is not limited in this application. When there are even number of subcarrier spacings between adjacent thin solid lines, a thick solid line and a thin solid line may be determined by using an even multiple of the subcarrier spacing. When the reference point is at another frequency location, the foregoing method is still applicable.

In another embodiment, the fourth channel in the method 300 is described as follows:

In this embodiment, a direct current carrier frequency of the fourth channel is the same as a carrier center frequency of the fourth channel, a direct current carrier frequency of a fifth channel is the same as a carrier center frequency of the fifth channel, and both the fourth channel and the fifth channel are channels with $N_{CB}$=i. For specific explanations of "channel with $N_{CB}$=i", refer to the method 200. Details are not described herein again.

In other words, in this embodiment, a direct current carrier frequency and a carrier center frequency of the channel with $N_{CB}$=i are the same, so that some subcarriers of a channel with $N_{CB}$=i+1 and the channel with $N_{CB}$=i have a same frequency location.

Optionally, the method may be understood as a partial subcarrier consistency solution.

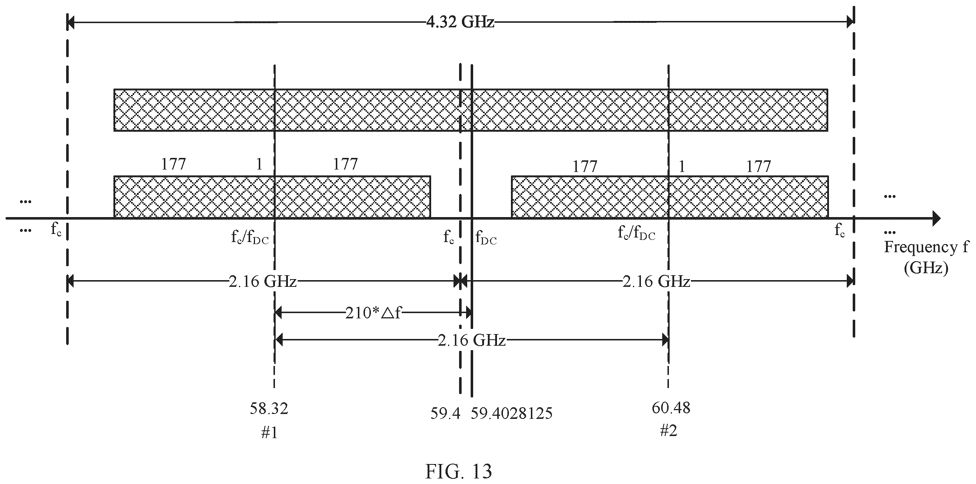

The following uses an example to describe this embodiment with reference to FIG. 13.

FIG. 13 is a diagram of another channel distribution according to an embodiment of this application. Similar to FIG. 5, in FIG. 13, a thin dashed line is a carrier center frequency of a 2.16 GHz channel, a thin solid line is a direct current carrier frequency of the 2.16 GHz channel, a thick dashed line is a carrier center frequency of a 4.32 GHz channel, a thick solid line is a direct current carrier frequency of the 4.32 GHz channel, and a shadow part is a PPDU bandwidth of each channel. As shown in FIG. 13, a carrier center frequency and a direct current carrier frequency location of the 2.16 GHz channel coincide with each other. In the figure, a direct current carrier frequency and a carrier center frequency of a left 2.16 GHz channel (that is, a #1 channel, which is also an example of a fourth channel) are the same, and a direct current carrier frequency and a carrier center frequency of a right 2.16 GHz channel (that is, a #2 channel, which is also an example of a fifth channel) are also the same. For a 4.32 GHz channel with $N_{CB}$=2, a direct current carrier frequency is (58.32+210*5.15625*10^(-3)) GHz=59.4028125 GHz, a subcarrier on the left of the direct current carrier frequency may have a completely same frequency location as a subcarrier on the #1 channel, and a subcarrier on the right of the direct current carrier frequency has a shift from a subcarrier on the #2 channel, where the shift is 59.4028125 GHz-59.4 GHz=0.0028125 GHz. This may be referred to as a partial subcarrier alignment solution.

In another embodiment, the fourth channel in the method 300 is described as follows:

In this embodiment, a spacing between a direct current carrier frequency of the fourth channel and a carrier center frequency of a fifth channel is an integer multiple of a subcarrier spacing. The fifth channel is a channel with $N_{CB}$=i+1. In other words, the fifth channel is not a channel with $N_{CB}$=1. In other words, a channel width of the fifth channel is greater than a minimum unit used for channel division. In other words, the channel width of the fifth channel is greater than a minimum channel width granularity. For example, in FIG. 3, if channel division is performed by using 2.16 GHz as a minimum unit, the channel width of the fifth channel is greater than 2.16 GHz.

Optionally, the fourth channel may be a channel with $N_{CB}$=i, or may be a channel with $N_{CB}$=i+1, or may be a channel with $N_{CB}$=i+2. This is not limited in this application.

Specifically, the reference point in FIG. 5 is the carrier center frequency of the #4 channel because the direct current carrier frequency and a carrier center frequency location of the #4 channel coincide with each other. However, another channel may be used to determine the reference point. For example, a channel with a larger channel width, for example, a 4.32 GHz channel, a 6.48 GHz channel, or an 8.64 GHz channel, may be used to determine the reference point. A selection manner may be that, in the 4.32 GHz channel, the 6.48 GHz channel, or the 8.64 GHz channel, a carrier center frequency of a channel whose carrier center frequency is the same as a direct current carrier frequency is used as a reference point. After the reference point is determined, a direct current carrier frequency of any channel may be determined based on the reference point, and a spacing between the direct current carrier frequency of any channel and the reference point may be an integer multiple of the subcarrier spacing. However, there may be a direct current relative shift or there may be no direct current relative shift between the direct current carrier frequency of the fourth channel and the carrier center frequency of the fourth channel. This specifically depends on a value of the subcarrier spacing.

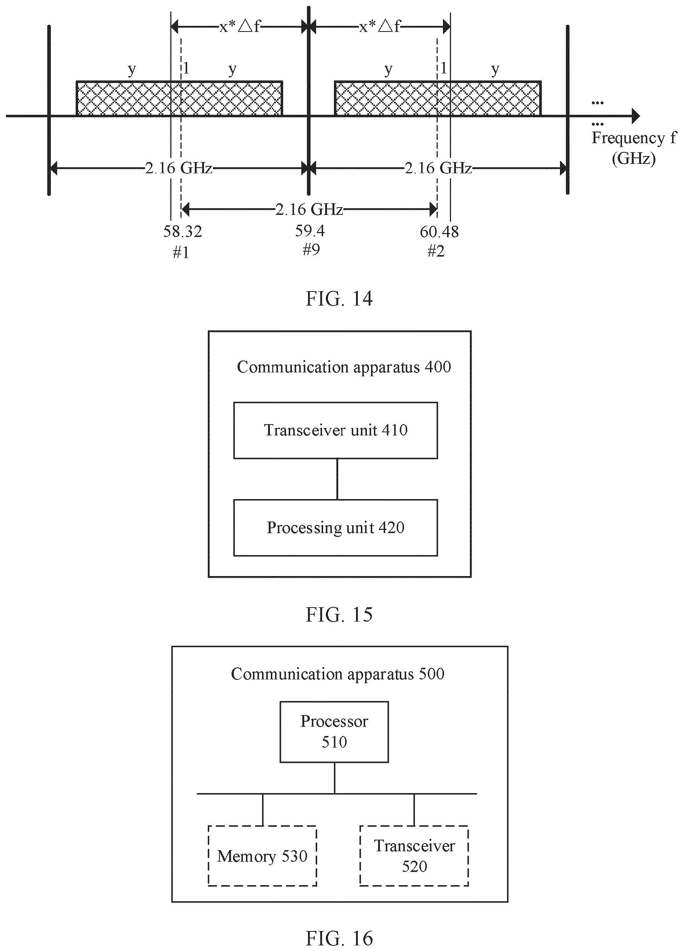

The following uses an example to describe this embodiment with reference to FIG. 14.

FIG. 14 is a diagram of another channel distribution according to an embodiment of this application.

Similar to FIG. 5, in FIG. 14, a thin dashed line is a carrier center frequency of a 2.16 GHz channel, a thin solid line is a direct current carrier frequency of the 2.16 GHz channel, a thick dashed line is a carrier center frequency of a 4.32 GHz channel, a thick solid line is a direct current carrier frequency of the 4.32 GHz channel, and a shadow part is a PPDU bandwidth of each channel. As shown in FIG. 14, a reference point is a carrier center frequency of a #9 channel (an example of a fifth channel), and the carrier center frequency of the #9 channel is 59.4 GHz. In this case, the carrier center frequency of the #9 channel is the same as a direct current carrier frequency of the channel.

After the reference point is determined, the direct current carrier frequency of the 2.16 GHz channel may be determined based on the reference point. For example, in FIG. 14, a spacing between a direct current carrier frequency of a left 2.16 GHz channel (a #1 channel, which is also an example of the fourth channel) and the reference point is x△f, that is, an integer multiple of the subcarrier spacing, where x may be any integer; and a spacing between a direct current carrier frequency of a right 2.16 GHz channel (a #2 channel, which is also another example of the fourth channel) and the reference point may also be x△f, that is, an integer multiple of the subcarrier spacing. In this case, there may be a direct current relative shift or there may be no direct current relative shift between the direct current carrier frequency of the left 2.16 GHz channel and the carrier center frequency of the left 2.16 GHz channel, and there may be a direct current relative shift or there may be no direct current relative shift between the direct current carrier frequency of the right 2.16 GHz channel and the carrier center frequency of the right 2.16 GHz channel. This specifically depends on a value of the subcarrier spacing. For another 4.32 GHz channel, for example, a direct current carrier frequency of a #10 channel (another example of the fourth channel, which is not shown in the figure, where for a location of the #10 channel, refer to FIG. 5) may also be determined based on the reference point. However, there may be a direct current relative shift or there may be no direct current relative shift between the direct current carrier frequency of the #10 channel and a carrier center frequency of the #10 channel. This specifically depends on a value of the subcarrier spacing. In addition, direct current carrier frequencies of other channels may also be determined based on the reference point, for example, 6.48 GHz and 8.64 GHz channels (which are not shown in the figure, where for locations of the 6.48 GHz and 8.64 GHz channels, refer to FIG. 3). There may be a direct current relative shift or there may be no direct current relative shift between a direct current carrier frequency of another channel and the reference point. This specifically depends on a value of the subcarrier spacing. A PPDU bandwidth depends on performance of a spectrum profile. For example, in FIG. 14, a PPDU bandwidth of the #1 channel and a PPDU bandwidth of the #2 channel (namely, shadow parts in FIG. 14) may include (1+2y) subcarriers, where a size of the PPDU bandwidth is (1+2y)*$\triangle$f, and a value of y depends on performance of the spectrum profile.

It should be further understood that the value of the subcarrier spacing is not limited in this application. In any embodiment of the foregoing method 300, the subcarrier spacing may be 5.15625 MHz, or may be another value.

In addition, during actual application, the embodiments of the method 300 may be combined with each other, and the method 200 and the method 300 may also be combined with each other. This is not limited.

The foregoing describes the method embodiments in embodiments of this application, and the following describes corresponding apparatus embodiments. It should be understood that descriptions of the apparatus embodiments correspond to the descriptions of the method embodiments. Therefore, for a part that is not described in detail, refer to the foregoing method embodiments.

FIG. 15 is a diagram of a communication apparatus according to an embodiment of this application. As shown in FIG. 15, the apparatus 400 may include a transceiver unit 410 and/or a processing unit 420. The transceiver unit 410 may communicate with the outside, and the processing unit 420 is configured to process data/information. The transceiver unit 410 may also be referred to as a communication interface or a communication unit.

In a possible implementation, the apparatus 400 may be the first station in the method 200 or the method 300, or may be a chip configured to implement the functions of the first station in the method 200 or the method 300. The apparatus 400 may implement a procedure performed by the first station in the method 200 or the method 300. The processing unit 420 is configured to perform a processing-related operation of the first station in the method 200 or the method 300. The transceiver unit 410 is configured to perform a receiving-related and/or sending-related operation of the first station in the method 200 or the method 300.

For example, the processing unit 420 is configured to generate a PPDU; and the transceiver unit 410 is configured to send the PPDU to a second station on a first channel, where the first channel is a channel with $N_{CB}$=i, $N_{CB}$ is a number of contiguous channels of a first width, a spacing between a carrier center frequency of the first channel and a carrier center frequency of a second channel is N times a subcarrier spacing, the second channel is a channel with $N_{CB}$=i, the first channel is adjacent to the second channel, N is a positive integer, and i is a positive integer.

It should be understood that the foregoing content is merely used as an example for understanding. The apparatus 400 can further implement other steps, actions, or methods related to the first station in the method 200 or the method 300. Details are not described herein.

In another possible implementation, the apparatus 400 may be the second station in the method 200 or the method 300, or may be a chip configured to implement the functions of the second station in the method 200 or the method 300. The apparatus 400 may implement a procedure performed by the second station in the method 200 or the method 300. The transceiver unit 410 is configured to perform a receiving-related and/or sending-related operation of the second station in the method 200 or the method 300, and the processing unit 420 is configured to perform a processing-related operation of the second station in the method 200 or the method 300.

For example, the transceiver unit 410 is configured to receive a PPDU on a first channel, where the first channel is a channel with $N_{CB}$=i, $N_{CB}$ is a number of contiguous channels of a first width, a spacing between a carrier center frequency of the first channel and a carrier center frequency of a second channel is N times a subcarrier spacing, the second channel is a channel with $N_{CB}$=i, the first channel is adjacent to the second channel, N is a positive integer, and i is a positive integer; and the processing unit 420 is configured to parse the PPDU.

It should be understood that the foregoing content is merely used as an example for understanding. The apparatus 400 can further implement other steps, actions, or methods related to the second station in the method 200 or the method 300. Details are not described herein.

It should be understood that the apparatus 400 herein is embodied in a form of a functional unit. A term "unit" herein may mean an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described functions.

The apparatus 400 has functions of implementing corresponding steps performed by the first station in the foregoing methods, or the apparatus 400 has functions of implementing corresponding steps performed by the second station in the foregoing methods. The functions may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmitter, and a receiving unit in the transceiver unit may be replaced by a receiver), and another unit, for example, the processing unit, may be replaced by a processor, to separately perform receiving and sending operations and a related processing operation in the method embodiments.

In addition, the transceiver unit may alternatively be a transceiver circuit (for example, may include a receiving circuit and a sending circuit), and the processing unit may be a processing circuit. In embodiments of this application, the apparatus 400 may be the first station or the second station in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

FIG. 16 is another diagram of a structure of a communication apparatus according to an embodiment of this application. As shown in FIG. 16, the communication apparatus 500 includes at least one processor 510. The processor 510 is coupled to a memory, and is configured to execute instructions stored in the memory, to control a transceiver to send a signal and/or receive a signal. Optionally, the communication apparatus 500 further includes a transceiver 520, configured to send a signal and/or receive a signal. Optionally, the communication apparatus 500 further includes a memory 530, configured to store instructions.

It should be understood that the processor 510 and the memory 530 may be integrated into one processing apparatus. The processor 510 is configured to execute program code stored in the memory 530, to implement the foregoing functions. During specific implementation, the memory 530 may alternatively be integrated into the processor 510, or may be independent of the processor 510.

It should be further understood that the transceiver 520 may include a receiver (which is also referred to as a receiver machine) and a transmitter (which is also referred to as a transmitter machine). The transceiver 520 may further include an antenna. There may be one or more antennas. The transceiver 520 may alternatively be a communication interface or an interface circuit.

When the communication apparatus 500 is a chip, the chip includes a transceiver unit and a processing unit. The transceiver unit may be an input/output circuit or a communication interface. The processing unit may be a processor, a microprocessor, or an integrated circuit integrated on the chip.

An embodiment of this application further provides a processing apparatus, including a processor and an interface. The processor may be configured to perform the methods in the foregoing method embodiments.

It should be understood that the processing apparatus may be a chip. For example, the processing apparatus may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processor (digital signal processor, DSP) circuit, a microcontroller unit (microcontroller unit, MCU), a programmable controller (programmable logic device, PLD), or another integrated chip.

In an implementation process, steps of the foregoing methods can be implemented by using a hardware integrated logic circuit in the processor, or by using instructions in a form of software. The steps of the methods disclosed with reference to embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

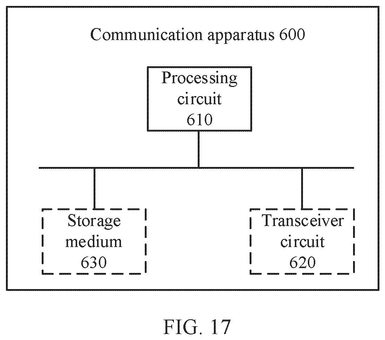

FIG. 17 is another diagram of a structure of a communication apparatus according to an embodiment of this application. As shown in FIG. 17, the apparatus 600 includes a processing circuit 610. The processing circuit 610 is configured to execute instructions, to implement the methods in the foregoing embodiments.

Optionally, the apparatus 600 may further include a transceiver circuit 620. The transceiver circuit 620 is configured to send a signal and/or receive a signal. The processing circuit 610 and the transceiver circuit 620 communicate with each other through an internal connection path, to control the transceiver circuit 620 to send a signal and/or receive a signal.

Optionally, the apparatus 600 may further include a storage medium 630. The storage medium 630 communicates with the processing circuit 610 and the transceiver circuit 620 through an internal connection path. The storage medium 630 is configured to store instructions, and the processing circuit 610 may execute the instructions stored in the storage medium 630.

In a possible implementation, the apparatus 600 is configured to implement a procedure corresponding to the first station in the foregoing method embodiments.

In another possible implementation, the apparatus 600 is configured to implement a procedure corresponding to the second station in the foregoing method embodiments.

According to the methods provided in embodiments of this application, this application further provides a computer program product. The computer program product includes computer program code, and the computer program code is used to implement the methods in the foregoing method embodiments of this application. In other words, when the computer program code runs on a computer, the computer is enabled to perform the methods in the foregoing method embodiments of this application.

According to the methods provided in embodiments of this application, this application further provides a computer-readable medium. The computer-readable medium stores program code, and the computer program code is used to implement the methods in the foregoing method embodiments of this application. In other words, when the program code runs on a computer, the computer is enabled to perform the methods in the foregoing method embodiments.

According to the methods provided in embodiments of this application, this application further provides a system, including the foregoing first station and/or second station.

A term "at least one of..." or "at least one piece of..." in this specification represents all or any combination of the listed items. For example, "at least one of A, B, and C" may represent the following six cases: Only A exists, only B exists, only C exists, both A and B exist, both B and C exist, and A, B, and C all exist. In this specification, "at least one" means one or more. In addition, "a plurality of" means two or more.

A term "and/or" in this specification describes only an association relationship between associated objects and represents that three relationships may exist. For example, A and/or B may represent the following three cases: Only A exists, both A and B exist, and only B exists. In addition, a character "/" in this specification generally indicates an "or" relationship between the associated objects.

It should be understood that, in embodiments of this application, "B corresponding to A" indicates that B is associated with A, and B may be determined based on A. However, it should be further understood that determining B based on A does not mean that B is determined based only on A. B may alternatively be determined based on A and/or other information. Terms "include", "have", and their variants all mean "include but not limited to", unless otherwise specifically emphasized in another manner.

It should be understood that, in various embodiments of this application, first, second, and various numbers are merely for differentiation for ease of description, and are not for limiting the scope of embodiments of this application. For example, different information is differentiated.

A person of ordinary skill in the art may be aware that, in combination with the examples described in embodiments disclosed in this specification, units and algorithm steps may be implemented by using electronic hardware or a combination of computer software and electronic hardware. Whether these functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, that is, may be located in one place, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, comprising:

    generating a physical layer protocol data unit PPDU; and
    sending the PPDU on a first channel, wherein the first channel is a channel with $N_{CB}=i$, $N_{CB}$ is a number of contiguous channels of a first width, a spacing between a carrier center frequency of the first channel and a carrier center frequency of a second channel is N times a subcarrier spacing, the second channel is a channel with $N_{CB}=i$, the first channel is adjacent to the second channel, N is a positive integer, and $i$ is a positive integer.

2. A communication method, comprising:

    receiving a physical layer protocol data unit PPDU on a first channel, wherein the first channel is a channel with $N_{CB}=i$, $N_{CB}$ is a number of contiguous channels of a first width, a spacing between a carrier center frequency of the first channel and a carrier center frequency of a second channel is N times a subcarrier spacing, the second channel is a channel with $N_{CB}=i$, the first channel is adjacent to the second channel, N is a positive integer, and $i$ is a positive integer; and
    parsing the PPDU.

3. The method according to claim 1 or 2, wherein a bandwidth of the PPDU is less than or equal to a channel width of the first channel.

4. The method according to any one of claims 1 to 3, wherein the method is applied to a frequency band greater than or equal to 45 GHz, or the carrier center frequency of the first channel is greater than or equal to 45 GHz.

5. The method according to any one of claims 1 to 4, wherein the method is applied to the directional multi-gigabit standard, the enhanced directional multi-gigabit standard, the China directional multi-gigabit standard, or the China millimeter-wave multi-gigabit standard.

6. The method according to any one of claims 1 to 5, wherein the first width is a minimum channel width granularity.

7. The method according to any one of claims 1 to 6, wherein

    the first width is 2.16 GHz; or
    the first width is 80 MHz.

8. The method according to any one of claims 1 to 7, wherein a value of i is any one of the following: 1, 2, 3, and 4.

9. The method according to any one of claims 1 to 8, wherein N is a product of M elements in a first real number set, M is a positive integer, and the first real number set is a set consisting of factors obtained by performing factorization based on a first value X, wherein

    $X=|f_{c1}-f_{c2}|$, wherein $f_{c1}$ is the carrier center frequency of the first channel, and $f_{c2}$ is the carrier center frequency of the second channel; or
    X=first width*number of sampling points*$10^n$, wherein n is an integer.

10. The method according to claim 9, wherein the M elements comprise only an odd number, or the M elements comprise at least one even number.

11. The method according to any one of claims 1 to 9, wherein the spacing between the carrier center frequency of the first channel and the carrier center frequency of the second channel is an odd multiple of the subcarrier spacing.

12. The method according to claim 11, wherein the first width is 2.16 GHz, and a value of the subcarrier spacing is any one of the following: 3.2 MHz, 3.456 MHz, 5.75 MHz, 9.6 MHz, 16 MHz, and 17.28 MHz.

13. The method according to any one of claims 1 to 9, wherein the spacing between the carrier center frequency of the first channel and the carrier center frequency of the second channel is an even multiple of the subcarrier spacing.

14. The method according to claim 13, wherein the first width is 2.16 GHz, and a value of the subcarrier spacing is any one of the following: 4.21875 MHz, 4.32 MHz, 5.625 MHz, 5.4 MHz, 6.75 MHz, 7.5 MHz, 8.4375 MHz, 8.64 MHz, and 10.8 MHz.

15. The method according to any one of claims 1 to 14, wherein

    a direct current carrier frequency of the first channel is the same as the carrier center frequency of the first channel; or
    a spacing between the direct current carrier frequency of the first channel and the carrier center frequency of the first channel is 0.5 times the subcarrier spacing.

16. The method according to any one of claims 1 to 15, wherein a third channel is a channel with $N_{CB}=i+1$, and a spacing between a direct current carrier frequency of the third channel and the direct current carrier frequency of the first channel is an integer multiple of the subcarrier spacing.

17. The method according to claim 16, wherein the spacing between the direct current carrier frequency of the third channel and the direct current carrier frequency of the first channel is an odd multiple or an even multiple of the subcarrier spacing.

18. The method according to claim 16 or 17, wherein one subcarrier of the third channel and one subcarrier of the first channel have a same frequency location.

19. A communication apparatus, comprising a unit or a module configured to perform the method according to any one of claims 1 to 18.

20. A computer-readable storage medium, configured to store a computer program, wherein the computer program comprises instructions used to implement the method according to any one of claims 1 to 18.

21. A chip, wherein the chip comprises a processor and an interface, and is configured to: invoke, from a memory, a computer program stored in the memory, and run the computer program, to perform the method according to any one of claims 1 to 18.

22. A computer program product, comprising computer program code, wherein the computer program code is used to implement the method according to any one of claims 1 to 18.

FIG. 1

FIG. 2

FIG. 3

EP 4 576 632 A1

FIG. 4

FIG. 5

200

First station

Second station

S210: Generate a PPDU

S220: Transmit the PPDU through a first channel, where the first channel is a channel with $N_{CB}=i$, a spacing between a carrier center frequency of the first channel and a carrier center frequency of a second channel is N times a subcarrier spacing, both the first channel and the second channel are channels with $N_{CB}=i$, the first channel is adjacent to the second channel, N is a positive integer, and $i$ is a positive integer

S230: Parse the PPDU

FIG. 6

FIG. 7

EP 4 576 632 A1

FIG. 8

EP 4 576 632 A1

640 MHz

320 MHz — 320 MHz

320 MHz

Frequency f
(MHz)

FIG. 9

2Q MHz

320 MHz — 320 MHz

Q MHz — Q MHz

Q MHz

Frequency f
(MHz)

FIG. 10

300

First station

Second station

S310: Generate a PPDU

S320: Transmit the PPDU through a fourth channel

S330: Parse the PPDU

FIG. 11

FIG. 12

FIG. 13

FIG. 14

FIG. 15

FIG. 16

Communication apparatus 600

Processing
circuit
610

Storage
medium
630

Transceiver
circuit
620

FIG. 17

## INTERNATIONAL SEARCH REPORT

International application No.

**PCT/CN2023/103719**

| A. | CLASSIFICATION OF SUBJECT MATTER |
|---|---|

H04L 5/00(2006.01)i

According to International Patent Classification (IPC) or to both national classification and IPC

| B. | FIELDS SEARCHED |
|---|---|

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNABS, CNTXT, VEN, WPABS, USTXT, EPTXT, WOTXT, CNKI: 倍, 间隔, 偶数, 频率, 频点, 直流, 奇数, 前导, 整数, 中心, 子载波, Multiple, spacing, even, frequency, odd, integer, center, subcarrier, N, ppdu

| C. | DOCUMENTS CONSIDERED TO BE RELEVANT | |
|---|---|---|

| Category* | Citation of document, with indication, where appropriate, of the relevant passages | Relevant to claim No. |
|---|---|---|
| X | CN 109803267 A (HUAWEI TECHNOLOGIES CO., LTD.) 24 May 2019 (2019-05-24) description, paragraphs [0052]-[0098] and [0184]-[0190] | 1-22 |
| X | US 2009232071 A1 (SAMSUNG ELECTRONICS CO., LTD.) 17 September 2009 (2009-09-17) description, paragraphs [0030]-[0093] | 1-22 |
| A | US 2019068396 A1 (LG ELECTRONICS INC.) 28 February 2019 (2019-02-28) entire document | 1-22 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **18 September 2023** | **20 September 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/103719**

| Patent document cited in search report | | | Publication date (day/month/year) | Patent family member(s) | | | Publication date (day/month/year) |
|---|---|---|---|---|---|---|---|
| CN | 109803267 | A | 24 May 2019 | EP | 3694277 | A1 | 12 August 2020 |
| | | | | EP | 3694277 | A4 | 17 March 2021 |
| | | | | WO | 2019095925 | A1 | 23 May 2019 |
| | | | | BR | 112020009385 | A2 | 13 October 2020 |
| | | | | JP | 2021503833 | A | 12 February 2021 |
| | | | | JP | 7063993 | B2 | 09 May 2022 |
| | | | | US | 2020280426 | A1 | 03 September 2020 |
| | | | | US | 11405168 | B2 | 02 August 2022 |
| US | 2009232071 | A1 | 17 September 2009 | US | 9031006 | B2 | 12 May 2015 |
| US | 2019068396 | A1 | 28 February 2019 | WO | 2017155329 | A2 | 14 September 2017 |
| | | | | WO | 2017155329 | A3 | 07 September 2018 |
| | | | | US | 10721091 | B2 | 21 July 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211070965